# EUROPEAN PATENT APPLICATION

(11) **EP 4 529 230 A1**
(43) Date of publication of application: **26.03.2025**
(21) Application number: 23859215.8
(22) Date of filing: 23.08.2023
(51) Int. Cl.: H04S 1/00

(54) **AUDIO PLAYBACK METHOD AND SYSTEM, AND RELATED APPARATUS**

(30) Priority: 30.08.2022 CN 202211049076
(71) Applicant: Huawei Technologies Co., Ltd., Shenzhen, Guangdong 518129 (CN)
(72) Inventor: CHEN, Li, Shenzhen, Guangdong 518129 (CN); HU, Shaowu, Shenzhen, Guangdong 518129 (CN); CHANG, Jing, Shenzhen, Guangdong 518129 (CN)
(74) Representative: Körber, Martin Hans
(86) International application number: PCT/CN2023/114402
(87) International publication number: WO 2024/046182

(57) **Abstract**

This application discloses an audio playing method and system and a related apparatus. A first electronic device establishes a communication connection to a second electronic device. The first electronic device obtains device information of the second electronic device, and determines one or more sound effect modes based on the device information of the second electronic device, where the one or more sound effect modes include a first sound effect mode. The first electronic device may process audio source data of the first electronic device based on the first sound effect mode and in response to an input for selecting the first sound effect mode, to obtain first audio data and second audio data. The first electronic device plays the first audio data and the second electronic device plays the second audio data at the same time, so that the first electronic device and the second electronic device collaboratively play the audio source data. In this way, a plurality of electronic devices jointly play audio data. This breaks a limitation of a speaker layout of a single electronic device, so that the plurality of electronic devices support more sound effect modes.

## Description

This application claims priority to Chinese Patent Application No. 202211049076.4, filed with the China National Intellectual Property Administration on August 30, 2022 and entitled "AUDIO PLAYING METHOD AND SYSTEM AND RELATED APPARATUS", which is incorporated herein by reference in its entirety.

### TECHNICAL FIELD

This application relates to the field of terminal technologies, and in particular, to an audio playing method and system and a related apparatus.

### BACKGROUND

Currently, when communication connections are established between a plurality of electronic devices, an electronic device A (for example, a mobile phone, a tablet, or a PC) may play audio data by using a speaker of the electronic device A, or the electronic device A may send the audio data to an electronic device B (for example, smart glasses, a neckband smart headset, or a smartwatch), and then the audio data is played by using a speaker of the electronic device B. At a same moment, only one electronic device can play the audio data.

### SUMMARY

This application provides an audio playing method and system and a related apparatus, so that a first electronic device establishes a communication connection to a second electronic device, and the first electronic device obtains device information of the second electronic device, and determines one or more sound effect modes based on the device information of the second electronic device, where the one or more sound effect modes include a first sound effect mode. The first electronic device may process audio source data of the first electronic device based on the first sound effect mode and in response to an input for selecting the first sound effect mode, to obtain first audio data and second audio data. The first electronic device plays the first audio data and the second electronic device plays the second audio data at the same time, so that the first electronic device and the second electronic device collaboratively play the audio source data.

According to a first aspect, this application provides an audio playing method. The method is applied to an audio playing system, the audio playing system includes a first electronic device and a second electronic device, the first electronic device establishes a communication connection to the second electronic device, and the method includes:

The first electronic device displays a collaborative playing control, where the collaborative playing control is used to indicate the first electronic device and the second electronic device to jointly play audio source data.

The first electronic device receives a first input for the collaborative playing control.

The first electronic device displays a plurality of sound effect mode options in response to the first input, where the plurality of sound effect mode options include a first sound effect mode option.

The first electronic device marks the first sound effect mode option in response to a second input for the first sound effect mode option.

The first electronic device sends second audio data to the second electronic device.

The second electronic device plays the second audio data.

The first electronic device plays first audio data when the second electronic device plays the second audio data, where both the first audio data and the second audio data include at least a part of content of the audio source data.

In this way, a plurality of electronic devices jointly play audio data. This breaks a limitation of a speaker layout of a single electronic device, so that the plurality of electronic devices support more sound effect modes. For example, a clear left-ear and right-ear surround effect may be implemented by using speakers of the plurality of electronic devices. In addition, a corresponding sound effect mode may be provided for a user based on a device type of the second electronic device, to implement different sound effect modes of different electronic devices. For example, if the second electronic device is smart glasses, because the smart glasses include a speaker located on a left frame temple and a speaker located on a right frame temple, a sound effect mode obtained based on a plurality of processing manners such as left and right channels, left and right surround channels, and human voice dialogue may be provided. In this way, loudness, a sense of surround, human voice definition, or the like of the audio source data is enhanced, so that a sense of immersion and encirclement of the user during video watching is enhanced, and user experience is improved. For another example, if the second electronic device is a smartwatch, because the smartwatch is located on a wrist, low-frequency vibration propagation may be implemented by enhancing a low-frequency audio signal, to enhance a rhythm perception effect of the user and improve user experience.

In a possible implementation, the audio source data may be sent by another electronic device (for example, the second electronic device) to the first electronic device.

In a possible implementation, both the first audio data and the second audio data include at least a part of content of the audio source data. The at least part of content may be data of a part of channels and/or data of a part of frequency bands in the audio source data.

In a possible implementation, before the first electronic device receives the first input, the first electronic device receives a third input for playing the audio source data.

Alternatively, after receiving the second input, the first electronic device receives a third input for playing the audio source data.

In this case, the user may select a required sound effect mode before playing the audio source data; or may select a required sound effect mode or switch a sound effect mode when playing the audio source data.

In a possible implementation, when a first sound effect mode is any one of a rhythm enhancement mode, a dialogue enhancement mode, a surround enhancement mode, an all-around enhancement mode, or an intelligent enhancement mode, at least a part of channels included in the first audio data are different from at least a part of channels included in the second audio data; and/or when the first sound effect mode is a loudness enhancement mode, at least a part of channels of the first audio data are the same as at least a part of channels of the second audio data.

In a possible implementation, the first sound effect mode option is a rhythm enhancement mode option, the first audio data includes data of a left channel and data of a right channel, and the second audio data includes data of a low-frequency channel. In this way, playing of a low-frequency sound can be enhanced.

In a possible implementation, when the second electronic device plays the second audio data, the method further includes:

The second electronic device converts the second audio data into a pulse signal; the second electronic device transmits the pulse signal to a motor of the second electronic device; and the motor of the second electronic device vibrates.

In this way, while playing the second audio data, the second electronic device may vibrate as a frequency of the second audio data changes. This enhances tactile experience of the user.

In a possible implementation, the second electronic device includes a plurality of speakers, and the second electronic device plays the second audio data by using all the speakers.

In a possible implementation, the first sound effect mode option is a dialogue enhancement mode option, the first audio data includes data of a left channel and data of a right channel, and the second audio data includes data of a center channel. In this way, a human voice can be reflected, and character lines are highlighted when a video is played.

**In** a possible implementation, the first sound effect mode option is a loudness enhancement mode option, the first audio data includes data of a left channel and data of a right channel, and the second audio data includes the data of the left channel and the data of the right channel.

**In** a possible implementation, when the second electronic device includes one speaker, the second electronic device plays the data of the left channel and the data of the right channel of the second audio data by using the one speaker.

Alternatively, when the second electronic device includes two speakers, and the two speakers include a first speaker and a second speaker, the second electronic device plays the data of the left channel by using the first speaker, and plays the data of the right channel by using the second speaker.

Alternatively, when the second electronic device includes three or more speakers, and the three or more speakers include a first speaker, a second speaker, and a third speaker, the second electronic device plays the data of the left channel by using the first speaker, plays the data of the right channel by using the second speaker, and plays the data of the left channel and the data of the right channel of the second audio data by using the third speaker.

**In** this case, based on a quantity of speakers of the second electronic device, the speakers may be appropriately used to play channel data of the second audio data, and speaker resources can be fully utilized.

**In** a possible implementation, the first sound effect mode option is a surround enhancement mode option, the first audio data includes data of a left channel and data of a right channel, and the second audio data includes data of a left surround channel and data of a right surround channel. In this way, a sense of surround can be enhanced.

In a possible implementation, the second electronic device includes two speakers, and the two speakers include a first speaker and a second speaker. The second electronic device plays the data of the left surround channel by using the first speaker, and plays the data of the right surround channel by using the second speaker.

Alternatively, when the second electronic device includes three or more speakers, and the three or more speakers include a first speaker, a second speaker, and a third speaker, the second electronic device plays the data of the left surround channel by using the first speaker, plays the data of the right surround channel by using the second speaker, and plays the data of the left surround channel and the data of the right surround channel of the second audio data by using the third speaker.

In a possible implementation, when the first electronic device includes two speakers, and the two speakers include a fourth speaker and a fifth speaker, the first electronic device plays the data of the left channel by using the fourth speaker, and plays the data of the right channel by using the fifth speaker.

Alternatively, when the first electronic device includes three or more speakers, and the three or more speakers include a fourth speaker, a fifth speaker, and a sixth speaker, the first electronic device plays the data of the left channel by using the fourth speaker, plays the data of the right channel by using the fifth speaker, and plays the data of the left channel and the data of the right channel of the second audio data by using the sixth speaker.

In a possible implementation, the first sound effect mode option is an all-around enhancement mode option, the first audio data includes data of a left channel and data of a right channel, and the second audio data includes data of a left surround channel, data of a right surround channel, and data of a center channel.

In a possible implementation, when the second electronic device includes two speakers, and the two speakers include a first speaker and a second speaker, the second electronic device plays the data of the left surround channel and the data of the center channel by using the first speaker, and plays the data of the right surround channel and the data of the center channel by using the second speaker.

Alternatively, when the second electronic device includes three or more speakers, and the three or more speakers include a first speaker, a second speaker, and a third speaker, the second electronic device plays the data of the left surround channel by using the first speaker, plays the data of the right surround channel by using the second speaker, and plays the data of the center channel by using the third speaker.

In a possible implementation, when the first electronic device includes two speakers, and the two speakers include a fourth speaker and a fifth speaker, the first electronic device plays the data of the left surround channel and the data of the center channel by using the fourth speaker, and plays the data of the right surround channel and the data of the center channel by using the fifth speaker.

Alternatively, when the first electronic device includes three or more speakers, and the three or more speakers include a fourth speaker, a fifth speaker, and a sixth speaker, the first electronic device plays the data of the left surround channel by using the fourth speaker, plays the data of the right surround channel by using the fifth speaker, and plays the data of the center channel by using the sixth speaker.

In a possible implementation, that the first electronic device displays a plurality of sound effect mode options in response to the first input specifically includes:

The first electronic device obtains, in response to the first input, the plurality of sound effect mode options based on a device type of the second electronic device and a stored correspondence between the device type and a sound effect mode option.

The device type of the second electronic device corresponds to a plurality of sound effect modes.

In this case, when the first electronic device establishes a connection to an electronic device of a different device type, a sound effect mode option suitable for the first electronic device and the second electronic device may be provided for the user. For example, when the device type of the electronic device is a smartwatch, a good surround effect cannot be brought when the smartwatch plays data of a surround channel. Therefore, when the second electronic device is a smartwatch, the first electronic device does not provide the surround enhancement mode.

In a possible implementation, the device type of the second electronic device is a smartwatch, the plurality of sound effect mode options include one or more of an intelligent enhancement mode option, a loudness enhancement mode option, a rhythm enhancement mode option, and a dialogue enhancement mode option, and the intelligent enhancement mode corresponding to the intelligent enhancement mode option is a combination of the rhythm enhancement mode and the loudness enhancement mode. In this case, the user may process the audio source data based on the intelligent enhancement mode when the user does not know which sound effect mode is to be selected.

In a possible implementation, audio data that corresponds to the intelligent enhancement mode and that is played by the first electronic device includes data of a left channel and data of a right channel, and audio data played by the second electronic device includes the data of the left channel, the data of the right channel, and data of a low-frequency channel.

In a possible implementation, the device type of the second electronic device is smart glasses, a neckband sound box, or a Bluetooth headset, the plurality of sound effect mode options include one or more of an intelligent enhancement mode option, a loudness enhancement mode option, a rhythm enhancement mode option, a dialogue enhancement mode option, a surround enhancement mode option, and an all-around enhancement mode option, and the intelligent enhancement mode corresponding to the intelligent enhancement mode option is a combination of the rhythm enhancement mode and the loudness enhancement mode, or a combination of the surround enhancement mode and the dialogue enhancement mode.

In a possible implementation, when the audio source data belongs to a video file, the intelligent enhancement mode is the combination of the surround enhancement mode and the dialogue enhancement mode, audio data that corresponds to the intelligent enhancement mode and that is played by the first electronic device includes data of a left channel and data of a right channel, and audio data played by the second electronic device includes data of a left surround channel, data of a right surround channel, and data of a center channel.

Alternatively, when the audio source data belongs to an audio file, the intelligent enhancement mode is the combination of the rhythm enhancement mode and the loudness enhancement mode, audio data that corresponds to the intelligent enhancement mode and that is played by the first electronic device includes data of a left channel and data of a right channel, and audio data played by the second electronic device includes the data of the left channel, the data of the right channel, and data of a low-frequency channel.

In this way, when the first electronic device plays a video, a surround and human voice may be highlighted, so that the user can enjoy the video immersively. When the first electronic device plays an audio, a low frequency may be highlighted, and music is more dynamic.

In a possible implementation, the first electronic device determines the intelligent enhancement mode based on whether played video content is related to a music scenario. In this way, even if the first electronic device plays the video, because video content is related to an audio source scenario, the intelligent enhancement mode may also be set to the combination of the rhythm enhancement mode and the loudness enhancement mode, to highlight a low frequency and increase loudness, thereby bringing better music listening experience to the user.

In a possible implementation, when the first electronic device processes the second audio data, loudness of weak audio data of the second audio data is enhanced. In this way, a weak sound can be highlighted and details can be enhanced. In this way, when playing a game, the user can hear a weak sound and observe a movement of a game character, so that game experience is improved. When watching a movie, the user can hear a clear background sound, for example, a wind sound, or an insect sound. This is more vivid.

In a possible implementation, before the first electronic device receives the second input, the plurality of sound effect mode options include the intelligent enhancement mode option that is marked; and that the first electronic device marks the first sound effect mode option in response to a second input for the first sound effect mode option specifically includes:

In response to the second input for the first sound effect mode option, the first electronic device unmarks the intelligent enhancement mode option, and marks the first sound effect mode option.

In this way, the first electronic device can provide the default intelligent enhancement mode option, and process the audio source data more intelligently when the user is not sure which sound effect mode is to be selected.

In a possible implementation, when the second electronic device includes the first speaker and the second speaker, and the first sound effect mode option is the loudness enhancement mode option, the surround enhancement mode option, or the all-around enhancement mode option, the method further includes: When a posture of the second electronic device and/or a posture of the first electronic device change/changes, the first audio data remains unchanged, and the second audio data sent by the first electronic device to the second electronic device changes with the posture.

In this case, when the posture of the first electronic device and/or the posture of the first electronic device change/changes, the first electronic device may process the second audio data, so that a virtual audio source obtained by simulating a sound signal played by the second electronic device is always located on the first electronic device, and a sound source and a picture are always in a same position. In this way, the user can move back to a position suitable for viewing the picture.

In a possible implementation, when the first electronic device includes the fourth speaker and the fifth speaker, the method further includes: When a posture of the second electronic device and/or a posture of the first electronic device change/changes, the second audio data remains unchanged, and the first audio data played by the first electronic device changes with the posture.

In this case, the first electronic device may process the first audio data based on a posture change, so that a virtual audio source obtained by simulating a sound signal played by the first electronic device is always in front of a line of sight of the user, and regardless of how the user moves, a case of inconsistent sounds in left and right ears does not occur.

In a possible implementation, when a position of the second electronic device and/or a position of the first electronic device change/changes, a beam direction of a sound wave signal emitted by a speaker of the first electronic device changes with the position.

In this case, the first electronic device may enable the beam direction to face the second electronic device, so that the user can hear a sound of the first electronic device more clearly.

In a possible implementation, a distance between the first electronic device and the second electronic device is a first distance, and the first electronic device plays the first audio data at first volume; or a distance between the first electronic device and the second electronic device is a second distance, and the first electronic device plays the first audio data at second volume, where the first distance is shorter than the second distance, and the first volume is lower than the second volume.

In this case, the first electronic device may set volume of the first electronic device based on the distance between the first electronic device and the second electronic device (which may also be understood as the user). When detecting that the user approaches the first electronic device, the first electronic device decreases the volume of the first electronic device to avoid interfering with playing of the second audio data. When detecting that the user moves far away from the first electronic device, the first electronic device increases the volume of the first electronic device to avoid that the user cannot clearly hear the sound played by the first electronic device.

In a possible implementation, when the first electronic device displays the plurality of sound effect modes in response to the first input, the method further includes:
The first electronic device displays a percentage bar.

If the first sound effect mode option is the loudness enhancement mode option, the rhythm enhancement mode option, or the dialogue enhancement mode option, when a value in the percentage bar is a first value, the second electronic device plays the second audio data at third volume, or when a value in the percentage bar is a second value, the second electronic device plays the second audio data at fourth volume, where the first value is less than the second value, and the third volume is lower than the fourth volume.

If the first sound effect mode option is the all-around enhancement mode option or the surround mode option, when a value in the percentage bar is a third value, the second electronic device plays the second audio data when a distance between a simulated audio source and the user is a third distance, or when a value in the percentage bar is a fourth value, the second electronic device plays the second audio data when a distance between a simulated audio source and the user is a fourth distance, where the third value is less than the fourth value, and the third distance is shorter than the fourth distance.

In this case, an effect of the sound effect mode may be set by using the percentage bar, and the user may adjust the value in the percentage bar to select an appropriate playing effect.

According to a second aspect, this application provides an audio playing system, including a first electronic device and a second electronic device.

The first electronic device is configured to implement the method steps performed by the first electronic device in the first aspect.

The second electronic device is configured to implement the method steps performed by the second electronic device in the first aspect.

According to a third aspect, this application provides an audio playing method. The method is applied to an audio playing system, the audio playing system includes a first electronic device and a second electronic device, and the method includes:
The first electronic device plays audio source data in collaboration with the second electronic device in response to an operation of establishing a communication connection between the first electronic device and the second electronic device.

In a possible implementation, the first electronic device plays first audio data, the second electronic device plays second audio data, both the first audio data and the second audio data include at least a part of content of the audio source data, and the first audio data is different from the second audio data.

In a possible implementation, data of a part of channels of the first audio data is different from data of a part of channels of the second audio data and/or data of a part of frequency bands of the first audio data is different from data of a part of frequency bands of the second audio data.

In a possible implementation, the audio source data may be sent by another electronic device (for example, the second electronic device or a server) to the first electronic device.

In a possible implementation, both the first audio data and the second audio data include at least a part of content of the audio source data. The at least part of content may be data of a part of channels and/or data of a part of frequency bands in the audio source data.

In a possible implementation, before the first electronic device receives a first input, the first electronic device receives a third input for playing the audio source data.

Alternatively, after receiving a second input, the first electronic device receives a third input for playing the audio source data.

In this case, a user may select a required sound effect mode before playing the audio source data; or may select a required sound effect mode or switch a sound effect mode when playing the audio source data.

In a possible implementation, when a first sound effect mode is any one of a rhythm enhancement mode, a dialogue enhancement mode, a surround enhancement mode, an all-around enhancement mode, or an intelligent enhancement mode, at least a part of channels included in the first audio data are different from at least a part of channels included in the second audio data; and/or when the first sound effect mode is a loudness enhancement mode, at least a part of channels of the first audio data are the same as at least a part of channels of the second audio data.

In a possible implementation, a first sound effect mode option is a rhythm enhancement mode option, the first audio data includes data of a left channel and data of a right channel, and the second audio data includes data of a low-frequency channel. In this way, playing of a low-frequency sound can be enhanced.

In a possible implementation, when the second electronic device plays the second audio data, the method further includes:
The second electronic device converts the second audio data into a pulse signal; the second electronic device transmits the pulse signal to a motor of the second electronic device; and the motor of the second electronic device vibrates. In this way, while playing the second audio data, the second electronic device may vibrate as a frequency of the second audio data changes. This enhances tactile experience of the user.

**In** a possible implementation, the second electronic device includes a plurality of speakers, and the second electronic device plays the second audio data by using all the speakers.

**In** a possible implementation, the first sound effect mode option is a dialogue enhancement mode option, the first audio data includes data of a left channel and data of a right channel, and the second audio data includes data of a center channel. In this way, a human voice can be reflected, and character lines are highlighted when a video is played.

**In** a possible implementation, the first sound effect mode option is a loudness enhancement mode option, the first audio data includes data of a left channel and data of a right channel, and the second audio data includes the data of the left channel and the data of the right channel.

**In** a possible implementation, when the second electronic device includes one speaker, the second electronic device plays the data of the left channel and the data of the right channel of the second audio data by using the one speaker. Alternatively, when the second electronic device includes two speakers, and the two speakers include a first speaker and a second speaker, the second electronic device plays the data of the left channel by using the first speaker, and plays the data of the right channel by using the second speaker. Alternatively, when the second electronic device includes three or more speakers, and the three or more speakers include a first speaker, a second speaker, and a third speaker, the second electronic device plays the data of the left channel by using the first speaker, plays the data of the right channel by using the second speaker, and plays the data of the left channel and the data of the right channel of the second audio data by using the third speaker. In this case, based on a quantity of speakers of the second electronic device, the speakers may be appropriately used to play channel data of the second audio data, and speaker resources can be fully utilized.

**In** a possible implementation, the first sound effect mode option is a surround enhancement mode option, the first audio data includes data of a left channel and data of a right channel, and the second audio data includes data of a left surround channel and data of a right surround channel. In this way, a sense of surround can be enhanced.

**In** a possible implementation, the second electronic device includes two speakers, and the two speakers include a first speaker and a second speaker. The second electronic device plays the data of the left surround channel by using the first speaker, and plays the data of the right surround channel by using the second speaker. Alternatively, when the second electronic device includes three or more speakers, and the three or more speakers include a first speaker, a second speaker, and a third speaker, the second electronic device plays the data of the left surround channel by using the first speaker, plays the data of the right surround channel by using the second speaker, and plays the data of the left surround channel and the data of the right surround channel of the second audio data by using the third speaker.

In a possible implementation, when the first electronic device includes two speakers, and the two speakers include a fourth speaker and a fifth speaker, the first electronic device plays the data of the left channel by using the fourth speaker, and plays the data of the right channel by using the fifth speaker. Alternatively, when the first electronic device includes three or more speakers, and the three or more speakers include a fourth speaker, a fifth speaker, and a sixth speaker, the first electronic device plays the data of the left channel by using the fourth speaker, plays the data of the right channel by using the fifth speaker, and plays the data of the left channel and the data of the right channel of the second audio data by using the sixth speaker.

In a possible implementation, the first sound effect mode option is an all-around enhancement mode option, the first audio data includes data of a left channel and data of a right channel, and the second audio data includes data of a left surround channel, data of a right surround channel, and data of a center channel.

In a possible implementation, when the second electronic device includes two speakers, and the two speakers include a first speaker and a second speaker, the second electronic device plays the data of the left surround channel and the data of the center channel by using the first speaker, and plays the data of the right surround channel and the data of the center channel by using the second speaker. Alternatively, when the second electronic device includes three or more speakers, and the three or more speakers include a first speaker, a second speaker, and a third speaker, the second electronic device plays the data of the left surround channel by using the first speaker, plays the data of the right surround channel by using the second speaker, and plays the data of the center channel by using the third speaker.

In a possible implementation, when the first electronic device includes two speakers, and the two speakers include a fourth speaker and a fifth speaker, the first electronic device plays the data of the left surround channel and the data of the center channel by using the fourth speaker, and plays the data of the right surround channel and the data of the center channel by using the fifth speaker. Alternatively, when the first electronic device includes three or more speakers, and the three or more speakers include a fourth speaker, a fifth speaker, and a sixth speaker, the first electronic device plays the data of the left surround channel by using the fourth speaker, plays the data of the right surround channel by using the fifth speaker, and plays the data of the center channel by using the sixth speaker.

In a possible implementation, that the first electronic device displays a plurality of sound effect mode options in response to the first input specifically includes: The first electronic device obtains, in response to the first input, the plurality of sound effect mode options based on a device type of the second electronic device and a stored correspondence between the device type and a sound effect mode option. The device type of the second electronic device corresponds to a plurality of sound effect modes. In this case, when the first electronic device establishes a connection to an electronic device of a different device type, a sound effect mode option suitable for the first electronic device and the second electronic device may be provided for the user. For example, when the device type of the electronic device is a smartwatch, a good surround effect cannot be brought when the smartwatch plays data of a surround channel. Therefore, when the second electronic device is a smartwatch, the first electronic device does not provide the surround enhancement mode.

In a possible implementation, the device type of the second electronic device is a smartwatch, the plurality of sound effect mode options include one or more of an intelligent enhancement mode option, a loudness enhancement mode option, a rhythm enhancement mode option, and a dialogue enhancement mode option, and the intelligent enhancement mode corresponding to the intelligent enhancement mode option is a combination of the rhythm enhancement mode and the loudness enhancement mode. In this case, the user may process the audio source data based on the intelligent enhancement mode when the user does not know which sound effect mode is to be selected.

In a possible implementation, audio data that corresponds to the intelligent enhancement mode and that is played by the first electronic device includes data of a left channel and data of a right channel, and audio data played by the second electronic device includes the data of the left channel, the data of the right channel, and data of a low-frequency channel.

In a possible implementation, the device type of the second electronic device is smart glasses, a neckband sound box, or a Bluetooth headset, the plurality of sound effect mode options include one or more of an intelligent enhancement mode option, a loudness enhancement mode option, a rhythm enhancement mode option, a dialogue enhancement mode option, a surround enhancement mode option, and an all-around enhancement mode option, and the intelligent enhancement mode corresponding to the intelligent enhancement mode option is a combination of the rhythm enhancement mode and the loudness enhancement mode, or a combination of the surround enhancement mode and the dialogue enhancement mode.

In a possible implementation, when the audio source data belongs to a video file, the intelligent enhancement mode is the combination of the surround enhancement mode and the dialogue enhancement mode, audio data that corresponds to the intelligent enhancement mode and that is played by the first electronic device includes data of a left channel and data of a right channel, and audio data played by the second electronic device includes data of a left surround channel, data of a right surround channel, and data of a center channel.

Alternatively, when the audio source data belongs to an audio file, the intelligent enhancement mode is the combination of the rhythm enhancement mode and the loudness enhancement mode, audio data that corresponds to the intelligent enhancement mode and that is played by the first electronic device includes data of a left channel and data of a right channel, and audio data played by the second electronic device includes the data of the left channel, the data of the right channel, and data of a low-frequency channel. In this way, when the first electronic device plays a video, a surround and human voice may be highlighted, so that the user can enjoy the video immersively. When the first electronic device plays an audio, a low frequency may be highlighted, and music is more dynamic.

In a possible implementation, the first electronic device determines the intelligent enhancement mode based on whether played video content is related to a music scenario. In this way, even if the first electronic device plays the video, because video content is related to an audio source scenario, the intelligent enhancement mode may also be set to the combination of the rhythm enhancement mode and the loudness enhancement mode, to highlight a low frequency and increase loudness, thereby bringing better music listening experience to the user.

In a possible implementation, when the first electronic device processes the second audio data, loudness of weak audio data of the second audio data is enhanced. In this way, a weak sound can be highlighted and details can be enhanced. In this way, when playing a game, the user can hear a weak sound and observe a movement of a game character, so that game experience is improved. When watching a movie, the user can hear a clear background sound, for example, a wind sound, or an insect sound. This is more vivid.

In a possible implementation, before the first electronic device receives the second input, the plurality of sound effect mode options include the intelligent enhancement mode option that is marked; and that the first electronic device marks the first sound effect mode option in response to the second input for the first sound effect mode option specifically includes:
In response to the second input for the first sound effect mode option, the first electronic device unmarks the intelligent enhancement mode option, and marks the first sound effect mode option. In this way, the first electronic device can provide the default intelligent enhancement mode option, and process the audio source data more intelligently when the user is not sure which sound effect mode is to be selected.

In a possible implementation, when the second electronic device includes the first speaker and the second speaker, and the first sound effect mode option is the loudness enhancement mode option, the surround enhancement mode option, or the all-around enhancement mode option, the method further includes: When a posture of the second electronic device and/or a posture of the first electronic device change/changes, the first audio data remains unchanged, and the second audio data sent by the first electronic device to the second electronic device changes with the posture. In this case, when the posture of the first electronic device and/or the posture of the first electronic device change/changes, the first electronic device may process the second audio data, so that a virtual audio source obtained by simulating a sound signal played by the second electronic device is always located on the first electronic device, and a sound source and a picture are always in a same position. In this way, the user can move back to a position suitable for viewing the picture.

In a possible implementation, when the first electronic device includes the fourth speaker and the fifth speaker, the method further includes: When a posture of the second electronic device and/or a posture of the first electronic device change/changes, the second audio data remains unchanged, and the first audio data played by the first electronic device changes with the posture. In this case, the first electronic device may process the first audio data based on a posture change, so that a virtual audio source obtained by simulating a sound signal played by the first electronic device is always in front of a line of sight of the user, and regardless of how the user moves, a case of inconsistent sounds in left and right ears does not occur.

In a possible implementation, when a position of the second electronic device and/or a position of the first electronic device change/changes, a beam direction of a sound wave signal emitted by a speaker of the first electronic device changes with the position. In this case, the first electronic device may enable the beam direction to face the second electronic device, so that the user can hear a sound of the first electronic device more clearly.

In a possible implementation, a distance between the first electronic device and the second electronic device is a first distance, and the first electronic device plays the first audio data at first volume; or a distance between the first electronic device and the second electronic device is a second distance, and the first electronic device plays the first audio data at second volume, where the first distance is shorter than the second distance, and the first volume is lower than the second volume. In this case, the first electronic device may set volume of the first electronic device based on the distance between the first electronic device and the second electronic device (which may also be understood as the user). When detecting that the user approaches the first electronic device, the first electronic device decreases the volume of the first electronic device to avoid interfering with playing of the second audio data. When detecting that the user moves far away from the first electronic device, the first electronic device increases the volume of the first electronic device to avoid that the user cannot clearly hear the sound played by the first electronic device.

In a possible implementation, when the first electronic device displays the plurality of sound effect modes in response to the first input, the method further includes: The first electronic device displays a percentage bar. If the first sound effect mode option is the loudness enhancement mode option, the rhythm enhancement mode option, or the dialogue enhancement mode option, when a value in the percentage bar is a first value, the second electronic device plays the second audio data at third volume, or when a value in the percentage bar is a second value, the second electronic device plays the second audio data at fourth volume, where the first value is less than the second value, and the third volume is lower than the fourth volume. If the first sound effect mode option is the all-around enhancement mode option or the surround mode option, when a value in the percentage bar is a third value, the second electronic device plays the second audio data when a distance between a simulated audio source and the user is a third distance, or when a value in the percentage bar is a fourth value, the second electronic device plays the second audio data when a distance between a simulated audio source and the user is a fourth distance, where the third value is less than the fourth value, and the third distance is shorter than the fourth distance. In this case, an effect of the sound effect mode may be set by using the percentage bar, and the user may adjust the value in the percentage bar to select an appropriate playing effect.

According to a fourth aspect, this application provides an audio playing method. The method includes:
A first electronic device displays a collaborative playing control, where the collaborative playing control is used to indicate the first electronic device and a second electronic device to jointly play audio source data.

The first electronic device receives a first input for the collaborative playing control.

The first electronic device displays a plurality of sound effect mode options in response to the first input, where the plurality of sound effect mode options include a first sound effect mode option.

The first electronic device marks the first sound effect mode option in response to a second input for the first sound effect mode option.

The first electronic device sends second audio data to the second electronic device.

The first electronic device plays first audio data when the second electronic device plays the second audio data, where both the first audio data and the second audio data include at least a part of content of the audio source data.

In this way, the first electronic device can provide different sound effect modes for a user, to implement collaborative playing of audio data by a plurality of devices.

In a possible implementation, the method further includes: Before the first electronic device receives the first input, the first electronic device receives a third input for playing the audio source data; or after receiving the second input, the first electronic device receives a third input for playing the audio source data.

In a possible implementation, when a first sound effect mode is any one of a rhythm enhancement mode, a dialogue enhancement mode, a surround enhancement mode, an all-around enhancement mode, or an intelligent enhancement mode, at least a part of channels included in the first audio data are different from at least a part of channels included in the second audio data; and/or when the first sound effect mode is a loudness enhancement mode, at least a part of channels of the first audio data are the same as at least a part of channels of the second audio data.

In a possible implementation, the first sound effect mode option is a rhythm enhancement mode option, the first audio data includes data of a left channel and data of a right channel, and the second audio data includes data of a low-frequency channel.

In a possible implementation, the first sound effect mode option is a dialogue enhancement mode option, the first audio data includes data of a left channel and data of a right channel, and the second audio data includes data of a center channel.

In a possible implementation, the first sound effect mode option is a loudness enhancement mode option, the first audio data includes data of a left channel and data of a right channel, and the second audio data includes the data of the left channel and the data of the right channel.

In a possible implementation, the first sound effect mode option is a surround enhancement mode option, the first audio data includes data of a left channel and data of a right channel, and the second audio data includes data of a left surround channel and data of a right surround channel.

In a possible implementation, when the first electronic device includes two speakers, and the two speakers include a fourth speaker and a fifth speaker, the first electronic device plays the data of the left channel by using the fourth speaker, and plays the data of the right channel by using the fifth speaker. Alternatively, when the first electronic device includes three or more speakers, and the three or more speakers include a fourth speaker, a fifth speaker, and a sixth speaker, the first electronic device plays the data of the left channel by using the fourth speaker, plays the data of the right channel by using the fifth speaker, and plays the data of the left channel and the data of the right channel of the second audio data by using the sixth speaker.

In a possible implementation, the first sound effect mode option is an all-around enhancement mode option, the first audio data includes data of a left channel and data of a right channel, and the second audio data includes data of a left surround channel, data of a right surround channel, and data of a center channel.

In a possible implementation, that the first electronic device displays a plurality of sound effect mode options in response to the first input specifically includes: The first electronic device obtains, in response to the first input, the plurality of sound effect mode options based on a device type of the second electronic device and a stored correspondence between the device type and a sound effect mode option. The device type of the second electronic device corresponds to a plurality of sound effect modes.

In a possible implementation, when the device type of the second electronic device is a smartwatch, the plurality of sound effect mode options include one or more of an intelligent enhancement mode option, a loudness enhancement mode option, a rhythm enhancement mode option, and a dialogue enhancement mode option, and the intelligent enhancement mode corresponding to the intelligent enhancement mode option is a combination of the rhythm enhancement mode and the loudness enhancement mode.

In a possible implementation, when the device type of the second electronic device is smart glasses, a neckband sound box, or a Bluetooth headset, the plurality of sound effect mode options include one or more of an intelligent enhancement mode option, a loudness enhancement mode option, a rhythm enhancement mode option, a dialogue enhancement mode option, a surround enhancement mode option, and an all-around enhancement mode option, and the intelligent enhancement mode corresponding to the intelligent enhancement mode option is a combination of the rhythm enhancement mode and the loudness enhancement mode, or a combination of the surround enhancement mode and the dialogue enhancement mode.

In a possible implementation, before the first electronic device receives the second input, the plurality of sound effect mode options include the intelligent enhancement mode option that is marked; and that the first electronic device marks the first sound effect mode option in response to the second input for the first sound effect mode option specifically includes: In response to the second input for the first sound effect mode option, the first electronic device unmarks the intelligent enhancement mode option, and marks the first sound effect mode option.

In a possible implementation, when the second electronic device includes the first speaker and the second speaker, and the first sound effect mode option is the loudness enhancement mode option, the surround enhancement mode option, or the all-around enhancement mode option, the method further includes: When a posture of the second electronic device and/or a posture of the first electronic device change/changes, the second audio data sent by the first electronic device remains unchanged, and the first audio data played by the first electronic device changes with the posture.

In a possible implementation, when the first electronic device includes the fourth speaker and the fifth speaker, the method further includes: When a posture of the second electronic device and/or a posture of the first electronic device change/changes, the first audio data remains unchanged, and the second audio data sent by the first electronic device to the second electronic device changes with the posture.

In a possible implementation, the method further includes: when a position of the second electronic device and/or a position of the first electronic device change/changes, a beam direction of a sound wave signal emitted by a speaker of the first electronic device changes with the position.

In a possible implementation, the method further includes: a distance between the first electronic device and the second electronic device is a first distance, and the first electronic device plays the first audio data at first volume; or a distance between the first electronic device and the second electronic device is a second distance, and the first electronic device plays the first audio data at second volume, where the first distance is shorter than the second distance, and the first volume is lower than the second volume.

According to a fifth aspect, this application provides an electronic device, including one or more processors, a plurality of speakers, and one or more memories. The one or more memories and the plurality of speakers are coupled to the one or more processors, the one or more memories are configured to store computer program code, the computer program code includes computer instructions, and when the one or more processors execute the computer instructions, the first electronic device is enabled to perform the audio playing method in any one of the possible implementations of the fourth aspect.

According to a sixth aspect, an embodiment of this application provides a computer storage medium, including computer instructions. When the computer instructions are run on a first electronic device, the first electronic device is enabled to perform the audio playing method in any one of the possible implementations of the fourth aspect.

According to a seventh aspect, this application provides a chip system. The chip system is applied to a first electronic device, the chip system includes one or more processors, and the processor is configured to invoke computer instructions, so that the first electronic device performs the audio playing method in any one of the possible implementations of the fourth aspect.

According to an eighth aspect, this application provides a computer program product including instructions. When a computer program is run on a first electronic device, the first electronic device is enabled to perform the audio playing method in any one of the possible implementations of the fourth aspect.

### BRIEF DESCRIPTION OF DRAWINGS

FIG. 1A is a diagram of a hardware structure of an electronic device 100 according to an embodiment of this application;
FIG. 1B is a diagram of a software structure of an electronic device 100 according to an embodiment of this application;
FIG. 2 is a diagram of a hardware structure of an electronic device 200 according to an embodiment of this application;
FIG. 3 is a schematic flowchart of an audio playing method according to an embodiment of this application;
FIG. 4A and FIG. 4B are a schematic flowchart according to an embodiment of this application;
FIG. 5 is a diagram of an application scenario according to an embodiment of this application;
FIG. 6A to FIG. 6D are diagrams of a group of interfaces according to an embodiment of this application;
FIG. 7A to FIG. 7E are diagrams of a scenario according to an embodiment of this application;
FIG. 8 is a diagram of another application scenario according to an embodiment of this application; and
FIG. 9A to FIG. 9C are diagrams of another group of interfaces according to an embodiment of this application.

### DESCRIPTION OF EMBODIMENTS

The technical solutions according to embodiments of this application are clearly and completely described in the following with reference to the accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The terms "first" and "second" mentioned below are merely intended for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

Embodiments of this application provide an audio playing method. An electronic device 100 establishes a communication connection to an electronic device 200. The electronic device 100 obtains device information of the electronic device 200, and determines one or more sound effect modes based on the device information of the electronic device 200, where the one or more sound effect modes include a first sound effect mode. The electronic device 100 may process audio source data of the electronic device 100 based on the first sound effect mode and in response to an input for selecting the first sound effect mode, to obtain first audio data played by the electronic device 100 and second audio data played by the electronic device 200. The electronic device 100 plays the first audio data and the electronic device 200 plays the second audio data at the same time, so that the electronic device 100 and the electronic device 200 collaboratively play the audio source data.

In this way, a plurality of electronic devices jointly play audio data. This breaks a limitation of a speaker layout of a single electronic device, so that the plurality of electronic devices support more sound effect modes. For example, a clear left-ear and right-ear surround effect may be implemented by using speakers of the plurality of electronic devices. In addition, a corresponding sound effect mode may be provided for a user based on a device type of the electronic device 200, to implement different sound effect modes of different electronic devices. For example, if the electronic device 200 is smart glasses, because the smart glasses include a speaker located on a left frame temple and a speaker located on a right frame temple, a sound effect mode obtained based on a plurality of processing manners such as left and right channels, left and right surround channels, and human voice dialogue may be provided. In this way, loudness, a sense of surround, human voice definition, or the like of the audio source data is enhanced, so that a sense of immersion and encirclement of the user during video watching is enhanced, and user experience is improved. For another example, if the electronic device 200 is a smartwatch, because the smartwatch is located on a wrist, low-frequency vibration propagation may be implemented by enhancing a low-frequency audio signal, to enhance a rhythm perception effect of the user and improve user experience.

In some embodiments, the electronic device 200 is a wearable device. In this way, because the wearable device is easy to carry, it is convenient for the user to use, in various application scenarios, sound effect modes provided by the electronic device 100 and the electronic device 200, to implement collaborative playing of the audio source data.

In some embodiments, the audio source data may be sent by another electronic device (for example, the electronic device 200) to the electronic device 100.

In some examples, both the first audio data and the second audio data include at least a part of content of the audio source data. The at least part of content may be data of a part of channels and/or data of a part of frequency bands in the audio source data.

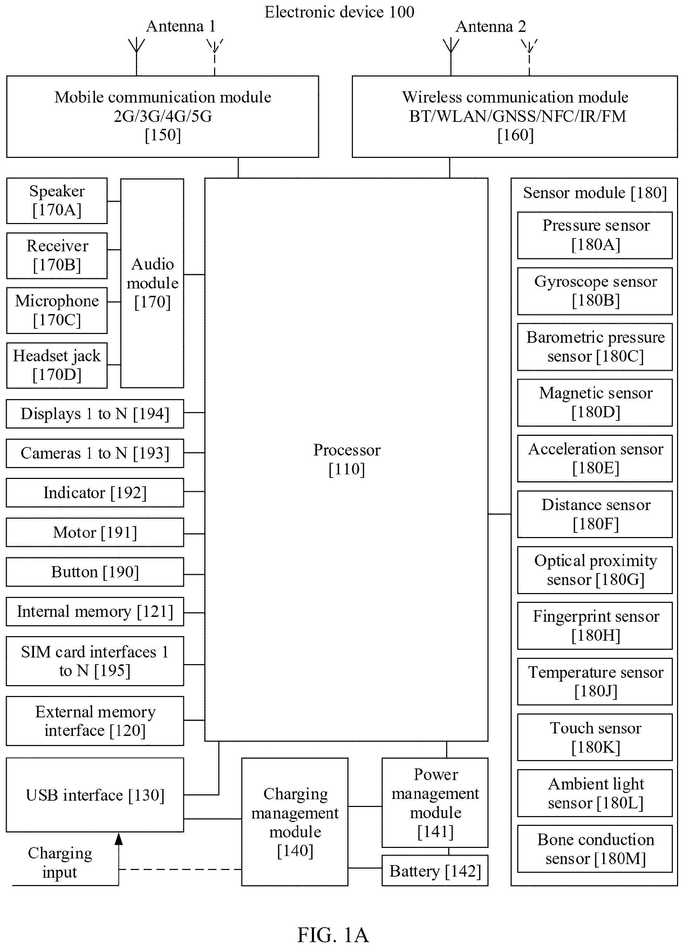

FIG. 1A is a diagram of a hardware structure of the electronic device 100 according to embodiments of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, a mixed reality (mixed reality, MR) device, an artificial intelligence (artificial intelligence, AI) device, a wearable device, a vehicle-mounted device, a smart home device, and/or a smart city device. A specific type of the electronic device 100 is not specially limited in embodiments of this application.

Optionally, in some embodiments of this application, the electronic device 100 may be a mobile phone or a tablet computer.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-betransmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may be further configured to connect to another electronic device like an AR device.

It may be understood that an interface connection relationship between the modules shown in embodiments is merely used as an example for description, and does not constitute a limitation on a structure of the electronic device 100. In some other embodiments of this application, the electronic device 100 may alternatively use an interface connection manner different from that in the foregoing embodiments, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external nonvolatile memory, to expand a storage capability of the electronic device 100. The external nonvolatile memory communicates with the processor 110 through the external memory interface 120, to implement a data storage function. For example, files such as music and a video are stored in the external nonvolatile memory.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A. In embodiments of this application, the speaker 170A may be configured to play the first audio data.

The receiver 170B, also referred to as an "earpiece", is configured to convert an audio electrical signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device 100, and is used in applications such as switching between landscape mode and portrait mode and a pedometer.

The barometric pressure sensor 180C is configured to measure barometric pressure. The magnetic sensor 180D includes a Hall sensor. The electronic device 100 may detect opening and closing of a flip cover by using the magnetic sensor 180D. The distance sensor 180F is configured to measure a distance. The optical proximity sensor 180G may be configured to determine whether there is an object near the electronic device 100. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The bone conduction sensor 180M may obtain a vibration signal. The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

The following describes a diagram of a software structure of the electronic device 100 according to embodiments of this application.

A software system of the electronic device 100 may use a layered architecture, an eventdriven architecture, a microkernel architecture, a micro service architecture, or a cloud architecture. In embodiments, an operating system with a layered architecture is used as an example to illustrate the software structure of the electronic device 100.

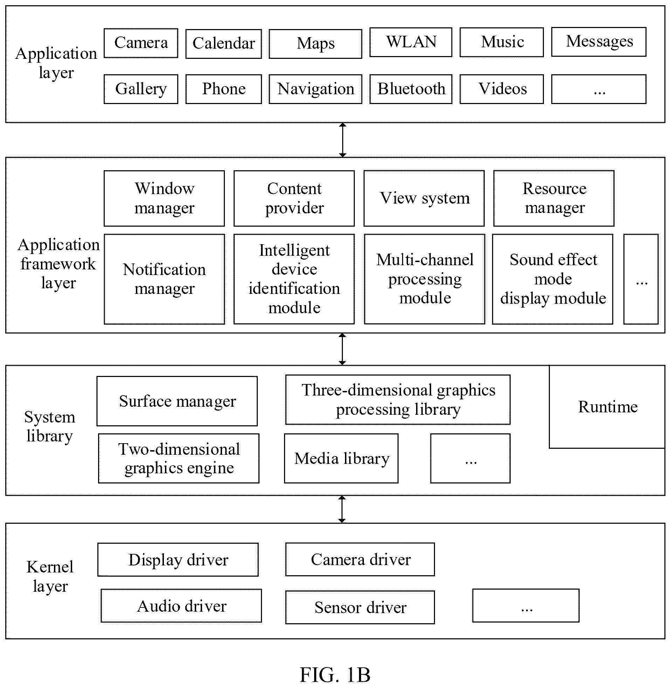

FIG. 1B is a block diagram of a software structure of the electronic device 100 according to embodiments.

In a layered architecture, software is divided into several layers, and each layer has a clear role and task. The layers communicate with each other through a software interface. In some embodiments, an operating system is divided into four layers: an application layer, an application framework layer, a runtime (runtime) and system library, and a kernel layer from top to bottom.

The application layer may include a series of application packages.

As shown in FIG. 1B, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

The application framework layer may include a window manager, a content provider, a view system, a resource manager, a notification manager, an intelligent device identification module, a multi-channel processing module, a sound effect mode display module, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on the screen in a form of a dialog window. For example, text information is displayed in the status bar, an announcement is given, the electronic device vibrates, or the indicator light blinks.

The intelligent device identification module may be configured to: obtain device information of the electronic device 200, determine a device type of the electronic device 200 based on the device information of the electronic device 200 (for example, a name of the electronic device 200 or capability information of the electronic device 200), and then determine, based on the device type of the electronic device 200 (for example, a headset, glasses, or a watch), one or more sound effect modes that can be implemented by the electronic device 100 and the electronic device 200. For example, the electronic device 100 is provided with a plurality of sound effect modes shown in the following Table 1. If the device type of the electronic device 200 is a Bluetooth headset, smart glasses, a neckband Bluetooth speaker, or the like, the intelligent device identification module may determine that the electronic device 100 and the electronic device 200 may implement an intelligent enhancement mode, an all-around enhancement mode, a surround enhancement mode, a dialogue enhancement mode, a loudness enhancement mode, and a rhythm enhancement mode. For another example, the device type of the electronic device 200 is a watch, and the intelligent device identification module may determine that the electronic device 100 and the electronic device 200 may implement an intelligent enhancement mode, a dialogue enhancement mode, and a rhythm enhancement mode.

In some embodiments, the intelligent device identification module may directly obtain, from the electronic device 200, information about a channel supported by the electronic device 200. For example, the electronic device 200 supports playing of only audio data of a single channel, or the electronic device 200 supports playing of audio data of dual channels, or the electronic device 200 supports audio data of more channels, for example, audio data of 5.1 channels (including a left channel, a right channel, a center channel, a left surround channel, a right surround channel, and a low-frequency channel), audio data of 7.1 channels (including a left channel, a right channel, a center channel, a left front surround channel, a right front surround channel, a left rear surround channel, a right rear surround channel, and a low-frequency channel), and the like. The intelligent device identification module may directly determine one or more supported sound effect modes based on the information about the channel supported by the electronic device 200. For example, if the electronic device 200 supports playing of only the audio data of the single channel, sound effect modes obtained by the intelligent device identification module are the loudness enhancement mode, the rhythm enhancement mode, and the dialogue enhancement mode. For another example, if the electronic device 200 supports playing of audio data of dual channels and more channels, sound effect modes obtained by the intelligent device identification module are the intelligent enhancement mode, the all-around enhancement mode, the surround enhancement mode, the dialogue enhancement mode, the loudness enhancement mode, and/or the rhythm enhancement mode.

In some other embodiments, the intelligent device identification module may obtain information about a quantity of speakers of the electronic device 200, to determine a supported sound effect mode. For example, if the quantity of speakers of the electronic device 200 is 1, sound effect modes obtained by the intelligent device identification module are the rhythm enhancement mode and the dialogue enhancement mode. If the quantity of speakers of the electronic device 200 is greater than 1, sound effect modes obtained by the intelligent device identification module are the intelligent enhancement mode, the all-around enhancement mode, the surround enhancement mode, the dialogue enhancement mode, the loudness enhancement mode, and/or the rhythm enhancement mode.

It should be noted that, in some examples, even if the quantity of speakers of the electronic device 200 is greater than 1, because the plurality of speakers are located on a same component of the electronic device 200, the electronic device 200 cannot support playing of the audio data of dual channels, and the sound effect modes obtained by the intelligent device identification module are only the rhythm enhancement mode and the dialogue enhancement mode.

The multi-channel processing module may be configured to process the audio source data based on the sound effect mode, to obtain the first audio data played by the electronic device 100 and the second audio data played by the electronic device 200.

The sound effect mode display module may be configured to display the sound effect mode obtained by the intelligent device identification module.

The runtime may be all code libraries, frameworks, and the like that are needed for running a program. For example, for the C language, the runtime includes a series of function libraries needed for running a C program. For the Java language, the runtime includes a kernel library and a virtual machine, and the kernel library may include a function that needs to be invoked by the Java language. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and the like.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a tap operation, and a control corresponding to the tap operation is a control of a camera application icon is used. The camera application invokes an interface of the application framework layer to enable the camera application, then enables the camera driver by invoking the kernel layer, and captures a static image or a video through the camera 193.

The following describes a diagram of a hardware architecture of the electronic device 200 according to embodiments of this application.

The electronic device 200 in embodiments of this application may be an electronic device including a speaker. For example, the electronic device 200 may be smart glasses, a Bluetooth headset (for example, a neckband headset), a neckband Bluetooth speaker, a smartwatch, a smart helmet, or the like. This is not limited in embodiments of this application.

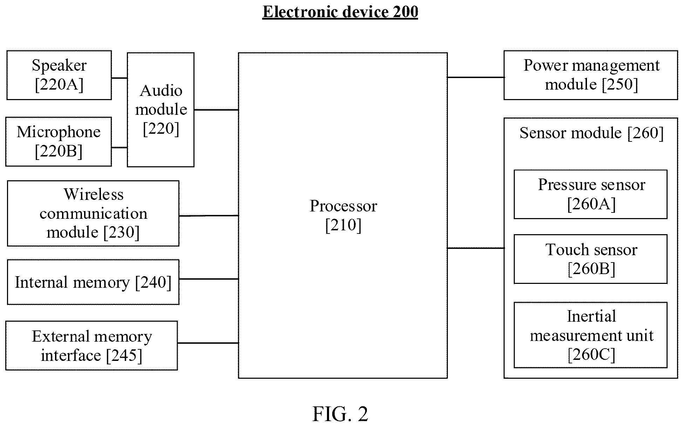

FIG. 2 is a diagram of a hardware structure of the electronic device 200 according to embodiments of this application.

As shown in FIG. 2, the electronic device 200 may include but is not limited to a processor 210, an audio module 220, a speaker 220A, a microphone 220B, a wireless communication module 230, an internal memory 240, an external memory interface 245, a power management module 250, a sensor module 260, and the like. The sensor module 260 may include a pressure sensor 260A, a touch sensor 260B, an inertial measurement unit (inertial measurement unit, IMU) 260C, and the like.

It may be understood that the structure shown in embodiments constitutes no specific limitation on the electronic device 100. In some other embodiments of this application, the electronic device 200 may include more or fewer components than those shown in the figure, or combine some components, or split some components, or have different component arrangements. The components shown in the figure may be implemented by using hardware, software, or a combination of software and hardware.

The processor 210 is usually configured to control an overall operation of the electronic device 200, and may include one or more processing units. For example, the processor 110 may include a central processing unit, an application processor, a modem processor, a baseband processor, and the like. Different processing units may be independent components, or may be integrated into one or more processors. The controller may generate an operation control signal based on an instruction operation code and a time sequence signal, to complete control of instruction reading and instruction execution. A memory may be further disposed in the processor 210, and is configured to store instructions and data. In some embodiments, the processor 210 may include one or more interfaces. The interface may include an I2C interface, an I2S interface, a PCM interface, a UART interface, an MIPI, a GPIO interface, a SIM interface and/or a USB interface, an SPI interface, and the like. For descriptions of the processor 210 and included interfaces, refer to the descriptions of the processor 110 in the embodiment shown in FIG. 1A. Details are not described herein again.

The electronic device 200 may implement an audio function, for example, audio playing, by using the audio module 220, the speaker 220A, the microphone 220B, the application processor, and the like.

The audio module 220 is configured to convert digital audio information into an analog audio signal for output, and is also configured to convert an analog audio input into a digital audio signal. The audio module 220 may be further configured to code and decode an audio signal. In some embodiments, the audio module 220 may be disposed in the processor 210, or some functional modules of the audio module 220 are disposed in the processor 210.

The speaker 220A, also referred to as a "loudspeaker", is configured to convert an audio electrical signal into a sound signal. The electronic device 200 may be used to listen to music or answer a call over the speaker 220A. In embodiments of this application, the speaker 220A may be configured to play the second audio data.

The microphone 220B, also referred to as a "mike" or a "mic", is configured to convert a sound signal into an electrical signal. In embodiments of this application, the microphone 220B may be configured to collect a nearby sound signal, for example, a sound signal generated when the electronic device 100 plays the first audio data. The electronic device 200 may include a wireless communication function. For example, the electronic device 200 may receive audio data from another electronic device (for example, the electronic device 100) and play the audio data. The wireless communication function may be implemented through the antenna (not shown), the wireless communication module 230, the modem processor (not shown), the baseband processor (not shown), and the like. The antenna is configured to transmit and receive electromagnetic wave signals. The electronic device 200 may include a plurality of antennas, and each antenna may be configured to cover one or more communication bands. Different antennas may be further multiplexed, to improve antenna utilization. For example, the antenna may be multiplexed as a diversity antenna in a wireless local area network. In some other embodiments, the antenna may be used in combination with a tuning switch. The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (for example, the speaker 220A).

The wireless communication module 230 may provide a wireless communication solution that is applied to the electronic device 200 and that includes a wireless local area network WLAN (for example, a Wi-Fi network), Bluetooth BT, a global navigation satellite system GNSS, frequency modulation FM, near field communication NFC, an infrared IR technology, and the like. The wireless communication module 230 may be one or more components integrating at least one communication processing module. The wireless communication module 230 receives an electromagnetic wave through the antenna, performs frequency modulation and filtering processing on an electromagnetic wave signal, and sends a processed signal to the processor 210. The wireless communication module 230 may further receive a to-be-sent signal from the processor 210, perform frequency modulation and amplification on the signal, and convert the signal into an electromagnetic wave through the antenna for radiation. In some embodiments, the wireless communication module 230 may be configured to transmit a communication signal, including receiving and sending a communication signal, for example, audio data and control signaling. The electronic device 200 may establish a communication connection to another electronic device like the electronic device 100 through the wireless communication module 230.

The internal memory 240 may be configured to store computer-executable program code, where the executable program code includes instructions. The processor 210 runs the instructions stored in the internal memory 240, to perform various function applications of the electronic device 100 and data processing. The internal memory 240 may include a program storage area and a data storage area. The program storage area may store an operating system, an application required by at least one function (for example, a sound playing function), and the like. The data storage area may store data (for example, audio data) created when the electronic device 100 is used, and the like. In addition, the internal memory 240 may further include a high-speed random access memory, a nonvolatile memory, for example, at least one magnetic disk storage device, a flash memory device, a universal flash storage, and the like.

The power management module 250 may be configured to receive a charging input from a charger. The power management module 250 may charge the electronic device 200, and may further supply power to each component of the electronic device 200.

The electronic device 100 is equipped with one or more sensors, including but not limited to a pressure sensor 260A, a touch sensor 260B, an inertial measurement unit 260C, and the like.

The pressure sensor 260A is configured to sense a pressure signal, and can convert the pressure signal into an electrical signal. There are a plurality of types of pressure sensors 260A, for example, a resistive pressure sensor, an inductive pressure sensor, and a capacitive pressure sensor. When a touch operation is performed on the electronic device 200, the electronic device 200 detects intensity of the touch operation through the pressure sensor 260A. The electronic device 200 may also calculate a touch position based on a detection signal of the pressure sensor 260A. In some embodiments, touch operations that are performed in a same touch position but have different touch operation intensity may correspond to different operation instructions. For example, when a touch operation whose touch operation intensity is less than a first pressure threshold is performed on the pressure sensor 260A, an instruction for pausing an audio is executed. When a touch operation whose touch operation intensity is greater than or equal to the first pressure threshold is performed on the pressure sensor 260A, an instruction for turning off the audio is executed. In some embodiments, touch operations that are performed in a same touch position but have different touch operation duration may correspond to different operation instructions. For example, when a touch operation whose touch operation duration is less than a first time threshold is performed on the pressure sensor 260A, a confirmation instruction is executed. When a touch operation whose touch operation duration is greater than or equal to the first time threshold is performed on the pressure sensor 260A, a power-on/off instruction is executed.

The touch sensor 260B is also referred to as a "touch component". The touch sensor 260B is configured to detect a touch operation performed on or near the touch sensor 260B. The touch sensor 260B may transfer the detected touch operation to an application processor to determine a type of a touch event. The electronic device 200 may provide an auditory output related to the touch operation through the audio module 220. The electronic device 200 may send an instruction corresponding to the touch operation to the another electronic device to which the communication connection is established.

The inertial measurement unit 260C is a sensor configured to detect and measure an acceleration and a rotational motion, and may include an accelerometer, an angular velocity meter (or referred to as a gyroscope), and the like. The accelerometer may detect accelerations in various directions (usually on three axes) of the electronic device 200. When the electronic device 200 is still, a magnitude and a direction of gravity may be detected. The accelerometer may be further configured to identify a posture of the electronic device 200, and is used in applications such as a somatic game scenario, switching between landscape mode and portrait mode, and a pedometer. The gyroscope may be configured to determine a motion posture of the electronic device 200. In some embodiments, an angular velocity of the electronic device 200 around three axes (namely, axes x, y, and z) may be determined through the gyroscope. The gyroscope may be further used in a navigation scenario, a somatic game scenario, camera image stabilization, and the like. For example, the electronic device 200 may track a movement of the electronic device 200 by using the IMU or the like.

In some embodiments of this application, the inertial measurement unit 260C may be configured to detect pose data of the electronic device 200, and the pose data may indicate an offset position of the electronic device 200 relative to the display of the electronic device 100. For example, the electronic device 200 may send the pose data to the electronic device 100. The electronic device 100 may process the audio source data based on the pose data, so that the user perceives that an audio source is located at the electronic device 100, or the user perceives that an audio source is located right in front of a line of sight of the user.

In some embodiments, an example in which the electronic device 200 is smart glasses is used for description. The smart glasses are worn on the head of the user. In addition to functions such as optical correction, visual light adjustment, and decoration that are of common glasses, the smart glasses may further have a communication function and an audio playing function. For example, the electronic device 200 may establish a communication connection to the electronic device 100. The electronic device 200 may receive audio data sent by the electronic device 100, and play the audio data through a speaker. The communication connection may be a wireless connection, for example, a wireless communication connection established by using the wireless communication module 230. Alternatively, the communication connection may be a wired connection, for example, a universal serial bus (universal serial bus, USB) connection or a high-definition multimedia interface (high-definition multimedia interface, HDMI) connection. A type of the communication connection is not limited in embodiments. The electronic device 200 may perform data transmission with another electronic device in these communication connection manners. For example, when the electronic device 200 establishes a communication connection to a communication device, and the communication device and another communication device are on a call, the electronic device 200 may be used to answer a call, listen to music, or the like. The electronic device 200 may further include a lens. The lens may be a transparent lens or a lens of another color, may be a spectacle lens with an optical correction function, may be a lens with an adjustable light filtering function, or may be sunglasses or other lenses having a decorative effect.

In some examples, when the electronic device 200 is smart glasses, the sensor module 260 may further include a bone conduction sensor. The bone conduction sensor may also be used as an audio playing component to output a sound to the user. When the audio playing component is a bone conduction sensor, an abutting portion may be disposed on each of the two frame temples of the electronic device 200, and the bone conduction sensor may be disposed at a position of the abutting portion. When the user wears the electronic device 200, the abutting portion abuts against the anterior skull of the ear, and further generates vibration, so that a sound wave is transmitted to the inner ear through the skull and the bone labyrinth. The position of the abutting portion is directly close to the skull, so that a vibration loss can be reduced, and the user can listen to the audio more clearly.

In some other embodiments, the electronic device 200 may be a smartwatch. The electronic device 200 may further include a watch band and a watch face. The watch face may include the foregoing display, to display an image, a video, a control, text information, and the like. The watch band may be configured to fasten the electronic device 200 to a human limb for ease of wearing.

If the electronic device 200 is a smartwatch, the electronic device 200 may further include a motor, and the motor may generate a vibration prompt. The motor may be used for an incoming call vibration prompt, or may be used for a touch vibration feedback. For example, touch operations performed on different applications (for example, photographing and audio playing) may correspond to different vibration feedback effects. The motor may also correspond to different vibration feedback effects for touch operations performed on different areas of the electronic device 200. Different application scenarios (for example, a time reminder, information receiving, an alarm clock, and a game) may also correspond to different vibration feedback effects. A touch vibration feedback effect may be further customized. In embodiments of this application, the electronic device 200 may generate a corresponding vibration feedback effect based on the audio data, so that the user perceives that the electronic device 200 vibrates as the audio data is played. Both a vibration frequency and vibration intensity are determined by the audio data. For example, the electronic device 200 may obtain a motor pulse signal based on the audio data, to generate a corresponding vibration feedback effect.

In some other embodiments, the electronic device 200 may be a neckband headset, a neckband Bluetooth speaker, or the like. The electronic device 200 may further include a neck holder, so that the electronic device 200 can be hung around the neck of the user.

In some other embodiments, the electronic device 200 may be a Bluetooth speaker, and the electronic device 100 and the electronic device 200 may jointly implement playing of audio data. In some examples, the electronic device 100 may process the audio source data based on a maximum quantity of channels that can be played by the electronic device 200, to obtain the second audio data. For example, if the electronic device 200 supports playing of the audio data of 5.1 channels, the speaker of the electronic device 100 plays the first audio data including the left channel and the right channel, and the speaker of the electronic device 200 plays the second audio data including 5.1 channels. If the electronic device 200 supports playing of the audio data of 7.1 channels, the speaker of the electronic device 100 plays the first audio data including the left channel and the right channel, and the speaker of the electronic device 200 plays the second audio data including 7.1 channels; and so on. In some other embodiments, the electronic device 100 may determine, based on that the device type of the electronic device 200 is a speaker, that the electronic device 100 and the electronic device 200 support the intelligent enhancement mode, the all-around enhancement mode, the surround enhancement mode, the dialogue enhancement mode, the loudness enhancement mode, and/or the rhythm enhancement mode. The electronic device 100 may process the audio source data based on a sound effect mode selected by the user, to obtain the first audio data and the second audio data. For a description of processing the audio source data, refer to the following embodiments. Details are not described herein.

In some examples, when the electronic device 100 is an AR device, a VR device, or an MR device, the electronic device 200 may be a mobile phone, a tablet, or the like. The electronic device 100 may be configured to play a video (that is, simultaneously play a video picture and audio data of the video), and the electronic device 200 may be configured to play an audio sent by the electronic device 100. The audio is obtained based on the video played by the electronic device 100.

It should be noted that, when the audio playing method provided in this application is implemented, the electronic device 100 and the electronic device 200 may simultaneously play audio data obtained based on same audio source data, so that the user can simultaneously hear sounds played by the electronic device 100 and the electronic device 200, to implement different audio playing effects. In a preferred solution of embodiments of this application, to enable the user to better hear the sound of the electronic device 100, the electronic device 200 is an electronic device that does not affect hearing of the sound of the electronic device 100 by the user, for example, in-ear earphones or over-ear headphones.

In some examples, if the electronic device 200 has a noise reduction function, when the noise reduction function is enabled for the electronic device 200, the user cannot hear the sound of the electronic device 100. Therefore, when the electronic device 200 implements the audio playing method provided in embodiments of this application, the noise reduction function is disabled for the electronic device 200. It may be understood that the noise reduction function may be enabled for the electronic device 200 when the user selects to play the audio source data only by using the electronic device 200, and the noise reduction function may be disabled for the electronic device 200 when the user selects to play the audio source data collaboratively by using the electronic device 100 and the electronic device 200. In this way, when selecting to play the audio source data only by using the electronic device 200, the user can reduce interference of external noise by using the noise reduction function. When selecting to play the audio source data collaboratively by using the electronic device 100 and the electronic device 200, the user may disable the noise reduction function, and simultaneously listen to sound signals played by the electronic device 100 and the electronic device 200, to enhance a sense of surround.

In some other embodiments, if the electronic device 200 includes a transparency mode, when the transparency mode is enabled for the electronic device 200, the electronic device 200 may collect a nearby sound signal by using a microphone, and play, by using a speaker, the sound signal collected by the microphone. In this way, it can be convenient for the user to listen to a sound other than a sound made by the electronic device 200 when playing the second audio data, namely, a sound made by the electronic device 100 when playing the first audio data. In some examples, the electronic device 200 may provide a transparency mode switch control to enable/disable the transparency mode. For example, the transparency mode switch control may be a control displayed on the display of the electronic device 200, and the electronic device 200 may receive a touch input for the control, to enable/disable the transparency mode. In some other examples, the electronic device 200 may provide a transparency mode switch. The switch may be a physical switch, and the switch may be used to enable/disable the transparency mode when receiving a rocker input of the user. In this way, when the electronic device 200 is an electronic device that blocks two ears of the user, like a headset (for example, in-ear earphones or over-ear headphones), the transparency mode may also be enabled, so that the user can hear the sound played by the electronic device 100.

In some examples, the electronic device 100 may increase playing volume of the electronic device 100 and/or decrease playing volume of the electronic device 200, so that the user can simultaneously hear the sounds played by the electronic device 100 and the electronic device 200.

In some embodiments, the electronic device 200 is a portable device provided with a speaker, for example, smart glasses, a Bluetooth headset, or a smartwatch. In this way, due to portability of the electronic device 200, the electronic device 100 and the electronic device 200 may implement the audio playing method provided in embodiments of this application in a plurality of scenarios (for example, an airport, a hotel, and an outdoor scenario), to provide auditory experience of a plurality of sound effect modes for the user.

The following describes a schematic flowchart of an audio playing method according to an embodiment of this application.

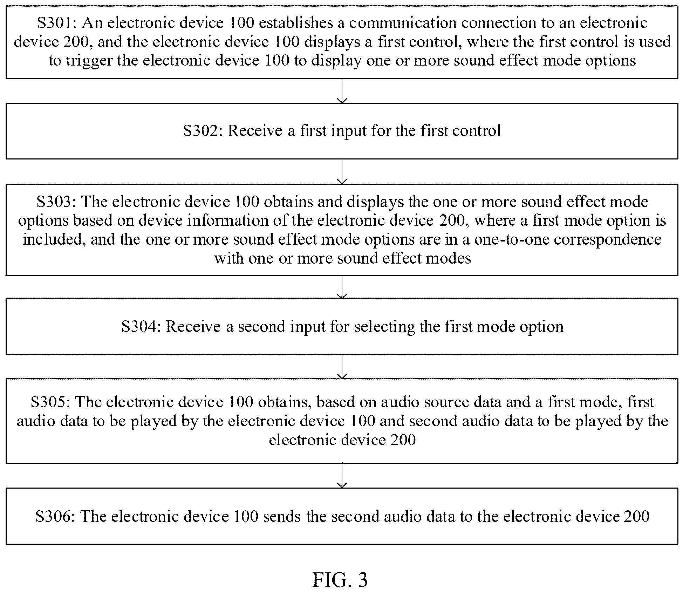

As shown in FIG. 3, the audio playing method includes the following steps.

S301: The electronic device 100 establishes a communication connection to the electronic device 200, and the electronic device 100 displays a first control, where the first control is used to trigger the electronic device 100 to display sound effect mode options corresponding to one or more sound effect modes.

The electronic device 100 establishes the communication connection to the electronic device 200. The electronic device 100 may establish a connection to the electronic device 200 in a wireless/wired manner. The communication connection established in a wireless manner may include but is not limited to a Wi-Fi communication connection, a Bluetooth communication connection, a peer-to-peer (peer-to-peer, P2P) communication connection, and the like. The Bluetooth communication connection may be implemented by using one or more Bluetooth communication solutions including but not limited to classic Bluetooth (basic rate/enhanced data rate, BR/EDR) or Bluetooth low energy (Bluetooth low energy, BLE). The electronic device 100 may display the first control in response to establishing the communication connection to the electronic device 200. The first control may be used to trigger the electronic device 100 to obtain and display sound effect modes supported by the electronic device 100 and the electronic device 200. It may also be understood as that the first control may trigger the electronic device 100 and the electronic device 200 to collaboratively play audio data of the electronic device 100.

In some examples, the electronic device 100 may further display a second control when displaying the first control. The second control may be used to trigger the electronic device 100 or the electronic device 200 to play the audio data of the electronic device 100. For example, when the electronic device 200 is a headset or glasses, the second control may be used to trigger the electronic device 100 to send the audio data to the electronic device 200, and play the audio data by using the electronic device 200. For another example, when the electronic device 200 is a watch, the second control may be used to trigger the electronic device 100 to play the audio data of the electronic device 100.

In some other examples, the first control may also be used to trigger the electronic device 100 or the electronic device 200 to play the audio data of the electronic device 100.

For example, when displaying the first control, the electronic device 100 further displays a specified area A and a specified area B. The electronic device 100 may trigger, when detecting that the first control is dragged to a range of the specified area A, the electronic device 100 and the electronic device 200 to collaboratively play the audio data of the electronic device 100. The electronic device 100 may trigger, when detecting that the first control is dragged to a range of the specified area B, the electronic device 100 or the electronic device 200 to play the audio data of the electronic device 100.

For another example, the electronic device 100 further displays a third control when displaying the first control, where the first control may represent the electronic device 200, and the third control may represent the electronic device 100. A distance between the first control and the third control is longer than a specified distance. The electronic device 100 may trigger, when detecting that the distance between the first control and the third control is longer than the specified distance, the electronic device 100 or the electronic device 200 to play the audio data of the electronic device 100. The electronic device 100 may trigger, when detecting that the distance between the first control and the third control is shorter than the specified distance, the electronic device 100 and the electronic device 200 to collaboratively play the audio data of the electronic device 100. When the distance between the first control and the third control is longer than the specified distance, the electronic device 100 may detect that the distance between the first control and the third control is shorter than the specified distance after receiving an input that a user drags the first control to the vicinity of the third control. When the distance between the first control and the third control is shorter than the specified distance, the electronic device 100 may detect that the distance between the first control and the third control is longer than the specified distance after receiving an input that the user drags the first control to leave the vicinity of the third control.

S302: The electronic device 100 receives a first input for the first control.

The first input may be an input like a tap or a double-tap on the first control, or the first input may be a voice instruction input or the like. This is not limited in embodiments of this application.

S303: The electronic device 100 obtains and displays one or more sound effect mode options based on device information of the electronic device 200, where a first mode option is included, and the one or more sound effect mode options are in a one-to-one correspondence with the one or more sound effect modes.

The following describes a plurality of sound effect modes provided in this embodiment of this application by using an example in which first audio data and second audio data include data of a plurality of channels in 5.1 channels. In this embodiment of this application, a channel is a mutually independent audio signal collected at different spatial positions during sound recording, and a quantity of channels may be understood as a quantity of audio sources during sound recording. The 5.1 channels include a left channel, a right channel, a left surround channel, a right surround channel, a center channel, and a low-frequency channel. Sound frequencies of the left channel, the right channel, the left surround channel, the right surround channel, and the center channel range from 20 Hz to 200 kHz, and a sound frequency of the low-frequency channel is lower than 150 Hz.

In a possible implementation, a sound effect mode may include but is not limited to an all-around enhancement mode, a surround enhancement mode, a rhythm enhancement mode, a human voice enhancement mode, and a loudness enhancement mode.

In the rhythm enhancement mode, a dialogue enhancement mode, the surround enhancement mode, or the all-around enhancement mode, a channel included in the first audio data is different from a channel included in the second audio data. It may be understood that, because the channel included in the first audio data is different from the channel included in the second audio data, the first audio data and the second audio data are different in one or more of an amplitude, a waveform, or a frequency.

In the loudness enhancement mode, the channel of the first audio data is the same as the channel of the second audio data. Optionally, in the loudness enhancement mode, an amplitude of the first audio data is different from an amplitude of the second audio data.

In some examples, in each sound effect mode, the channel included in the first audio data played by the electronic device 100 and the channel included in the second audio data played by the electronic device 200 are shown in Table 1.

**Table 1**

| Sound effect mode | Channel of the first audio data | Channel of the second audio data | Effect of the sound effect mode |
|---|---|---|---|
| All-around enhancement mode | Left channel, right channel, and center channel | Left surround channel, right surround channel, and center channel | Enhance a sense of surround and improve a sense of immersion |
| Surround enhancement mode | Left channel and right channel | Left surround channel and right surround channel | Enhance a sense of surround |
| Dialogue enhancement mode | Left channel and right channel | Center channel | Enhance a human voice and highlight the human voice |
| Loudness enhancement mode | Left channel and right channel | Left channel and right channel | Enhance loudness |
| Rhythm enhancement mode | Left channel and right channel | Low-frequency channel | Enhance vibration rhythm |

As shown in Table 1, in the all-around enhancement mode, the first audio data obtained based on audio source data includes the left channel, the right channel, and the center channel. The second audio data obtained based on the audio source data includes the left surround channel, the right surround channel, and the center channel. In this way, in the all-around enhancement mode, a better sense of encirclement of a sound field may be implemented by increasing a quantity of speakers (in other words, increasing speakers of the electronic device 200). In addition, in the all-around enhancement mode, audio data played by the electronic device 100 and the electronic device 200 includes the center channel, and the center channel includes a human voice in the audio data, so that dialogue clarity can be improved.

In the surround enhancement mode, the first audio data obtained based on the audio source data includes the left channel and the right channel. The second audio data obtained based on the audio source data includes the left surround channel and the right surround channel. In this way, in the surround enhancement mode, a better sense of encirclement of a sound field may be implemented by increasing a quantity of speakers (in other words, increasing speakers of the electronic device 200).

In the dialogue enhancement mode, the first audio data obtained based on the audio source data includes the left channel and the right channel. The second audio data obtained based on the audio source data includes only the center channel. In this way, dialogue clarity can be improved by using the electronic device 200.

In the loudness enhancement mode, the first audio data obtained based on the audio source data includes the left channel and the right channel. The second audio data obtained based on the audio source data includes the left channel and the right channel. In this way, audio loudness can be increased by using the electronic device 200.

In the rhythm enhancement mode, the first audio data obtained based on the audio source data includes the left channel and the right channel. The second audio data obtained based on the audio source data includes the low-frequency channel. In this way, the electronic device 200 may play a heavy bass, so that the user can feel power brought by the heavy bass.

In some examples, the electronic device 200 plays the first audio data, and the electronic device 100 plays the second audio data.

If the electronic device 200 includes only one speaker, in the rhythm enhancement mode, the electronic device 200 may play data of the low-frequency channel by using the speaker; in the dialogue enhancement mode, the electronic device 200 may play data of the center channel by using the speaker; and in the loudness enhancement mode, the electronic device 200 needs to play data of the left channel and data of the right channel by using the speaker. Specifically, the electronic device 200 may superimpose the data of the left channel and the data of the right channel, and play, by using the speaker, the data of the left channel and the data of the right channel that are superimposed. Alternatively, the electronic device 200 may downmix the data of the left channel and the data of the right channel to obtain data including only a single channel, and play the data of the single channel by using the speaker.

If the electronic device 200 includes two speakers, in the rhythm enhancement mode, the electronic device 200 may play the data of the low-frequency channel by using both speakers; in the dialogue enhancement mode, the electronic device 200 may play the data of the center channel by using both speakers; in the loudness enhancement mode, the electronic device 200 plays the data of the left channel by using a left speaker, and plays the data of the right channel by using a right speaker; in the surround enhancement mode, the electronic device 200 plays data of the left surround channel by using the left speaker, and plays data of the right surround channel by using the right speaker; and in the all-around enhancement mode, the electronic device 200 may play the data of the left surround channel and the data of the center channel by using the left speaker, and play the data of the right surround channel and the data of the center channel by using the right speaker.

In the following embodiments, when one speaker is used to play data of a plurality of channels, it may be understood as that the speaker plays superimposed data obtained based on the plurality of channels, or plays downmixed data obtained based on the plurality of channels. To reduce repeated descriptions, specific descriptions of playing data of a plurality of channels by using one speaker are not repeatedly explained below.

If the electronic device 200 includes three speakers, in the rhythm enhancement mode, the electronic device 200 may play the data of the low-frequency channel by using all the speakers; in the dialogue enhancement mode, the electronic device 200 may play the data of the center channel by using all the speakers; in the loudness enhancement mode, the electronic device 200 plays the data of the left channel by using a left speaker, plays the data of the right channel by using a right speaker, and plays the data of the left channel and the data of the right channel by using another speaker; in the surround enhancement mode, the electronic device 200 plays the data of the left surround channel by using the left speaker, plays the data of the right surround channel by using the right speaker, and plays the data of the left surround channel and the data of the right surround channel by using the another speaker; and in the all-around enhancement mode, the electronic device 200 may play the data of the left surround channel by using the left speaker, play the data of the right surround channel by using the right speaker, and play the data of the center channel by using the another speaker (which may be referred to as a center speaker herein).

By analogy, when the electronic device 200 includes more speakers, in the rhythm enhancement mode, the electronic device 200 may play the data of the low-frequency channel by using all the speakers; in the dialogue enhancement mode, the electronic device 200 plays the data of the center channel by using all the speakers; in the loudness enhancement mode, the electronic device 200 plays the data of the left channel by using a left speaker, plays the data of the right channel by using a right speaker, and plays the data of the left channel and the data of the right channel by using another speaker; in the surround enhancement mode, the electronic device 200 plays the data of the left surround channel by using the left speaker, plays the data of the right surround channel by using the right speaker, and plays the data of the left surround channel and the data of the right surround channel by using the another speaker; and in the all-around enhancement mode, the electronic device 200 may play the data of the left surround channel by using the left speaker, play the data of the right surround channel by using the right speaker, play the data of the center channel by using a center speaker, and play the data of the left surround channel, the data of the right surround channel, and the data of the center channel by using another speaker, or play the data of the center channel by using another speaker. Optionally, the electronic device 200 may play the data of the left surround channel and the data of the center channel by using the left speaker, and play the data of the right surround channel and the data of the center channel by using the right speaker.

If the electronic device 100 includes two speakers, in the surround enhancement mode, the rhythm enhancement mode, the dialogue enhancement mode, or the loudness enhancement mode, the electronic device 100 may play the data of the left channel by using a left speaker, and play the data of the right channel by using a right speaker; and in the all-around enhancement mode, the electronic device 100 may play the data of the left channel and the data of the center channel by using the left speaker, and play the data of the right channel and the data of the center channel by using the right speaker.

If the electronic device 100 includes three speakers, in the surround enhancement mode, the rhythm enhancement mode, the dialogue enhancement mode, or the loudness enhancement mode, the electronic device 100 may play the data of the left channel by using the left speaker, play the data of the right channel by using the right speaker, and play the data of the left channel and the data of the right channel by using another speaker; and in the all-around enhancement mode, the electronic device 100 may play the data of the left channel by using the left speaker, play the data of the right channel by using the right speaker, and play the data of the center channel by using the another speaker (which may be referred to as a center speaker herein).

By analogy, when the electronic device 100 includes more speakers, in the surround enhancement mode, the rhythm enhancement mode, the dialogue enhancement mode, or the loudness enhancement mode, the electronic device 100 may play the data of the left channel by using the left speaker, play the data of the right channel by using the right speaker, and play the data of the left channel and the data of the right channel by using another speaker; and in the all-around enhancement mode, the electronic device 100 may play the data of the left channel by using the left speaker, play the data of the right channel by using the right speaker, play the data of the center channel by using a center speaker, and play the data of the left surround channel, the data of the right surround channel, and the data of the center channel by using another speaker, or play the data of the center channel by using another speaker.

In some examples, when the electronic device 200 is worn, a speaker located near a left ear of the user may be referred to as the left speaker, and may be configured to play the data of the left surround channel or the data of the left channel of the second audio data; and a speaker located near a right ear of the user may be referred to as the right speaker, and may be configured to play the data of the right surround channel or the data of the right channel of the second audio data.

The center speaker is configured to play the data of the center channel, and a position of the center speaker is not limited. In some examples, the center speaker may be one or more speakers located between the left speaker and the right speaker. For example, if the electronic device 200 is smart glasses, the left speaker may be located on a left frame temple, the right speaker may be located on a right frame temple, and the center speaker may be located on a nose pad.

In some embodiments, the electronic device 100 is located in front of a line of sight of the user, and the electronic device 200 is worn on the head of the user. The electronic device 100 is responsible for playing a front-end left channel and a front-end right channel of the audio source data, and the electronic device 200 is responsible for playing a back-end left surround channel and a back-end right surround channel of the audio source data. In this way, because a speaker of the electronic device 100 is located in front of the line of sight of the user, and a speaker of the electronic device 200 is located near an ear of the user, based on a relative position relationship among the electronic device 100, the electronic device 200, and the user, the electronic device 100 is responsible for playing a front-end channel, and the electronic device 200 is responsible for playing a back-end channel, to simulate a 3D surround sound playing scenario. In this way, the user can feel that the user is in the center of 3D space, and can hear voices transmitted from the front and rear, so that the user can obtain immersive experience.

The electronic device 100 may obtain the device information of the electronic device 200, determine a device type of the electronic device 200 based on the device information of the electronic device 200, and then determine, based on the device type of the electronic device 200 (for example, a headset, glasses, a watch, or a speaker), one or more sound effect modes that can be implemented by the electronic device 100 and the electronic device 200. If the device type of the electronic device 200 is a watch, a sound effect mode determined by the electronic device 100 includes the dialogue enhancement mode, the loudness enhancement mode, and the rhythm enhancement mode. If the device type of the electronic device 200 is a headset, glasses, or a speaker, a sound effect mode determined by the electronic device 100 includes the all-around enhancement mode, the surround enhancement mode, the dialogue enhancement mode, the loudness enhancement mode, and the rhythm enhancement mode. For descriptions of playing an audio by the electronic device 100 and the electronic device 200 in a sound effect mode, refer to the embodiment shown in Table 1. Details are not described herein again.

The electronic device 100 may obtain the device information of the electronic device 200 when establishing the communication connection to the electronic device 200. The device information of the electronic device 200 may include but is not limited to a device name of the electronic device 200. In some examples, the device name of the electronic device 200 includes the device type of the electronic device 200. For example, when the device name of the electronic device 200 is "xwatch", the electronic device 100 determines that the device name of the electronic device 200 includes "watch", and may accordingly determine that the device type of the electronic device 200 is a watch. For another example, when the device name of the electronic device 200 includes a character string like "eye" or "glass", it may be accordingly determined that the device type of the electronic device 200 is glasses. When the device name of the electronic device 200 includes a character string like "audio", it may be accordingly determined that the device type of the electronic device 200 is a speaker. When the device name of the electronic device 200 includes a character string like "ear", " earphone", or "headphone", it may be accordingly determined that the device type of the electronic device 200 is a headset.

In some other examples, the device name of the electronic device 200 is a product model set by a manufacturer, and the electronic device 100 may obtain a corresponding device type based on a stored correspondence between a device name and a device model and based on the device name of the electronic device 200 and the correspondence. Optionally, the electronic device 200 stores the device type of the electronic device 200, and the electronic device 100 may directly obtain the device type of the electronic device 200 from the electronic device 200. Optionally, the electronic device 100 may obtain the device information of the electronic device 200 in response to the input for the first control.

In some embodiments, the electronic device 100 may obtain information about a channel supported by the electronic device 200 or information about a quantity of speakers of the electronic device 200, to determine the one or more sound effect modes that can be implemented by the electronic device 100 and the electronic device 200. For details, refer to the embodiment shown in FIG. 1B. Details are not described herein again.

In a possible implementation, the electronic device 100 may further provide an intelligent enhancement mode. When the electronic device 100 does not receive an input for selecting any sound effect mode, the electronic device 100 may set the sound effect mode to the intelligent enhancement mode. The intelligent enhancement mode is one or a combination of the one or more sound effect modes supported by the electronic device 100 and the electronic device 200. In this way, when the user does not select a sound effect mode, the electronic device 100 may also process the played audio source data in the intelligent enhancement mode, so that the electronic device 100 and the electronic device 200 jointly play a sound.

Specifically, when a sound effect mode supported by the electronic device 100 and the electronic device 200 is the all-around enhancement mode, the surround enhancement mode, or the loudness enhancement mode, the electronic device 100 may determine the intelligent enhancement mode based on whether a video is played. When the electronic device 100 simultaneously plays a video and an audio, the intelligent enhancement mode may be a combination of the surround enhancement mode and the dialogue enhancement mode. In other words, the first audio data includes the left channel and the right channel, and the second audio data includes the left surround channel, the right surround channel, and the center channel. When the electronic device 100 plays only an audio, the intelligent enhancement mode may be a combination of the loudness enhancement mode and the rhythm enhancement mode. In other words, the first audio data includes the left channel and the right channel, and the second audio data includes the left surround channel, the right surround channel, and the low-frequency channel.

When a sound effect mode supported by the electronic device 100 and the electronic device 200 is the dialogue enhancement mode, the rhythm enhancement mode, or the loudness enhancement mode, the electronic device 100 may set the intelligent enhancement mode to be a combination of the rhythm enhancement mode and the loudness enhancement mode. In other words, the first audio data includes the left channel and the right channel, and the second audio data includes the left channel, the right channel, and the low-frequency channel.

It should be noted that, because the intelligent enhancement mode is obtained by the electronic device 100 based on the sound effect mode supported by the electronic device 100 and the electronic device 200, the one or more sound effect modes determined by the electronic device 100 always include the intelligent enhancement mode.

The electronic device 100 may display the sound effect mode options corresponding to the one or more sound effect modes. The one or more sound effect mode options include the first mode option, the one or more sound effect modes include a first mode, and the first mode option corresponds to the first mode.

S304: The electronic device 100 receives a second input for selecting the first mode option.

When displaying the one or more sound effect mode options including the first mode option, the electronic device 100 may receive the second input for selecting the first mode option, and determine to process the audio source data based on the first mode. The second input may be a tap, a double tap, a voice instruction input, or the like.

S305: The electronic device 100 obtains, based on the audio source data and the first mode, the first audio data to be played by the electronic device 100 and the second audio data to be played by the electronic device 200.

The electronic device 100 is playing the audio source data, and the electronic device 100 may process the audio source data based on the first mode in response to the second input, to obtain the first audio data and the second audio data. In some examples, before receiving the second input, the electronic device 100 may receive an input of the user for playing the audio source data.

Alternatively, after receiving the second input, the electronic device 100 sets the electronic device 100 (and the electronic device 200) to play the audio data in the first mode. The electronic device 100 may process the audio source data based on the first mode after receiving the input for playing the audio source data, to obtain the first audio data and the second audio data.

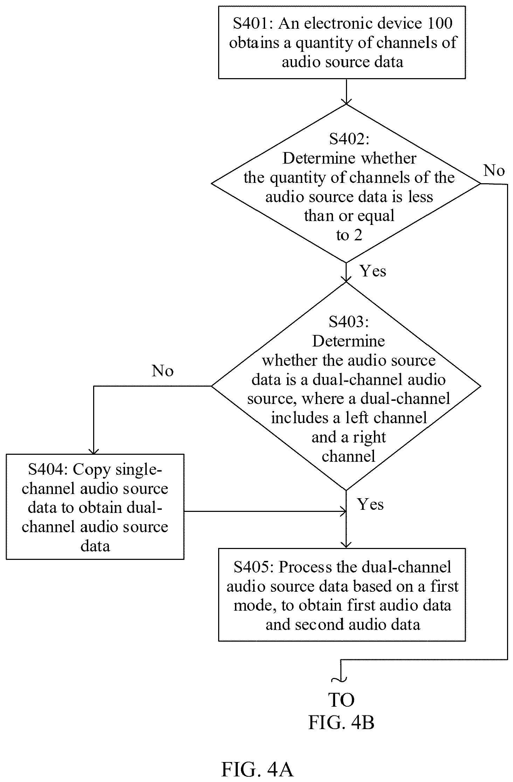

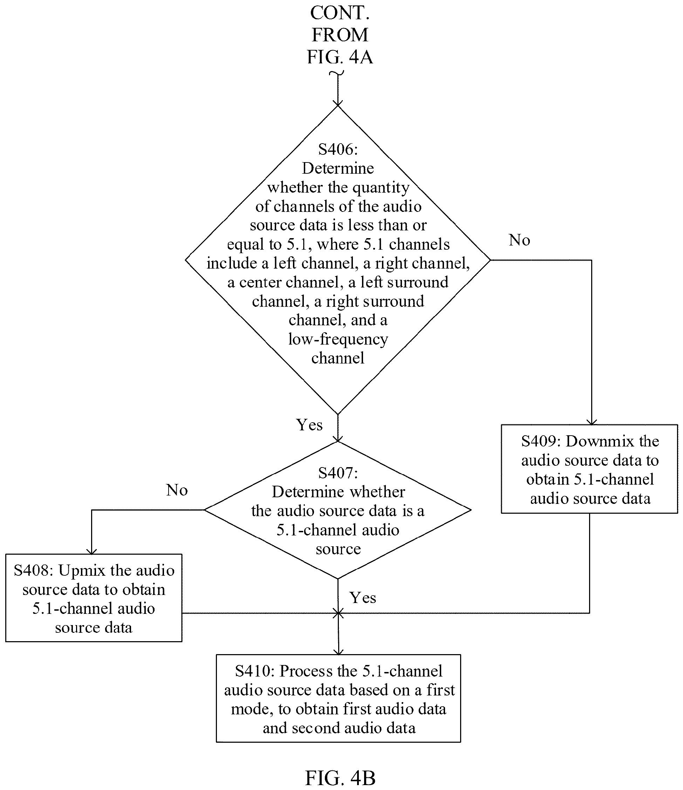

A procedure in which the electronic device 100 obtains the first audio data and the second audio data based on the first mode is shown in FIG. 4A and FIG. 4B.

S401: The electronic device 100 obtains a quantity of channels of the audio source data.

The electronic device 100 obtains a quantity of channels of to-be-played audio source data.

S402: Determine whether the quantity of channels of the audio source data is less than or equal to 2.

The electronic device 100 determines whether the quantity of channels of the audio source data is less than or equal to 2. When the electronic device 100 determines that the quantity of channels of the audio source data is less than or equal to 2, step S403 is performed. When the electronic device 100 determines that the quantity of channels of the audio source data is greater than 2, step S406 is performed.

S403: Determine whether the audio source data is a dual-channel audio source, where a dual-channel includes the left channel and the right channel.

The electronic device 100 determines whether the audio source data is the dual-channel audio source, that is, whether the audio source data includes only the left channel and the right channel. When the electronic device 100 determines that the audio source data is not the dual-channel audio source, step S404 may be performed. When the electronic device 100 determines that the audio source data is the dual-channel audio source, step S405 may be performed.

S404: The electronic device 100 copies single-channel audio source data to obtain dual-channel audio source data.

That the electronic device 100 determines that the audio source data is not the dual-channel audio source may be understood as that the electronic device 100 determines that the audio source data is the single-channel audio source data. The electronic device 100 may copy the single-channel audio source data to obtain the dual-channel audio source data.

In some examples, the electronic device 100 may directly copy the single-channel audio source data to obtain two segments of single-channel audio source data, and use one segment of single-channel audio source data as audio data of the left channel and the other segment of single-channel audio source data as audio data of the right channel, to obtain the audio source data including the left channel and the right channel. Alternatively, the electronic device 100 may obtain two segments of single-channel audio source data through copying, and then process the two segments of single-channel audio source data by using a specified algorithm to adjust one or more of a phase difference, amplitudes, and frequencies of the two segments of audio source data, to obtain the audio source data including the left channel and the right channel.

S405: The electronic device 100 processes the dual-channel audio source data based on the first mode, to obtain the first audio data and the second audio data.

If the first mode is the all-around enhancement mode, the electronic device 100 may upmix the dual-channel audio source data to obtain 5.1-channel audio source data; then superimpose the low-frequency channel on the left channel, the right channel, and the center channel; extract the data of the left channel, the data of the right channel, and the data of the center channel from the dual-channel audio source data, to obtain the first audio data; and extract the data of the left surround channel, the data of the right surround channel, and the data of the center channel from the dual-channel audio source data, to obtain the second audio data.

If the first mode is the surround enhancement mode, the electronic device 100 may use the dual-channel audio source data as the first audio data, and the electronic device 100 may further process the dual-channel audio source data by using a related algorithm, to obtain the second audio data including the left surround channel and the right surround channel.

If the first mode is the rhythm enhancement mode, the electronic device 100 may use the dual-channel audio source data as the first audio data, and the electronic device 100 may further extract the data of the low-frequency channel in the dual-channel audio source data, to obtain the second audio data including the low-frequency channel.

If the first mode is the dialogue enhancement mode, the electronic device 100 may use the dual-channel audio source data as the first audio data, and the electronic device 100 may further process the dual-channel audio source data by using a related algorithm, and extract the data of the center channel in the dual-channel audio source data, to obtain the second audio data including the center channel.

If the first mode is the loudness enhancement mode, the electronic device 100 may use the dual-channel audio source data as the first audio data and the second audio data.

S406: Determine whether the quantity of channels of the audio source data is less than or equal to 5.1, where the 5.1 channels include the left channel, the right channel, the center channel, the left surround channel, the right surround channel, and the low-frequency channel.

The electronic device 100 may determine whether the quantity of channels of the audio source data is less than 5.1. When the electronic device 100 determines that the quantity of channels of the audio source data is less than or equal to 5.1, step S407 may be performed. When the electronic device 100 determines that the quantity of channels of the audio source data is greater than 5.1, step S409 may be performed.

That the quantity of channels is less than 5.1 may be understood as that the quantity of channels included in the audio source data is less than the quantity of channels included in the 5.1 channels. For example, when the channels of the audio source data are 4 channels, 4.1 channels, 3 channels, 3.1 channels, or 2.1 channels, the quantity of channels is less than 5.1. The 4 channels may be understood as that the audio source data includes the left channel, the right channel, the left surround channel, and the right surround channel; the 4.1 channels may be understood as that the audio source data includes the left channel, the right channel, the low-frequency channel, the left surround channel, and the right surround channel; and so on.

Similarly, that the quantity of channels is greater than 5.1 may be understood as that the quantity of channels included in the audio source data is greater than the quantity of channels included in the 5.1 channels. For example, when the channels of the audio source data are 7.1 channels or 10.1 channels, the quantity of channels is greater than 5.1. The 7.1 channels may be understood as that the audio source data includes the left channel, the right channel, a front left surround channel, a front right surround channel, a rear left surround channel, a rear right surround channel, the center channel, and the low-frequency channel.

S407: Determine whether the audio source data is a 5.1-channel audio source.

The electronic device 100 may determine whether the audio source data is the 5.1-channel audio source. When the electronic device 100 determines that the audio source data is 5.1-channel audio source data, step S410 may be performed. When the electronic device 100 determines that the quantity of channels of the audio source data is not the 5.1-channel audio source data, step S408 may be performed.

S408: Upmix the audio source data to obtain the 5.1-channel audio source data.

If the electronic device 100 determines that the quantity of channels of the audio source data is less than 5.1, the audio source data may be upmixed by using a specified upmixing algorithm to obtain the 5.1-channel audio source data.

S409: Downmix the audio source data to obtain the 5.1-channel audio source data.

If the electronic device 100 determines that the quantity of channels of the audio source data is greater than 5.1, the audio source data may be downmixed by using a specified downmixing algorithm to obtain the 5.1-channel audio source data.

S410: The electronic device 100 processes the 5.1-channel audio source data based on the first mode, to obtain the first audio data and the second audio data.

If the first mode is the all-around enhancement mode, the electronic device 100 may extract the left surround channel, the right surround channel, and the center channel from the 5.1-channel audio source data, to obtain the second audio data. The electronic device 100 may further superimpose the low-frequency channel in the audio source data on the left channel, the right channel, and the center channel; and then extract the left channel, the right channel, and the center channel from superimposed audio source data to obtain the first audio data. It may be understood that, if the low-frequency channel is superimposed on the left surround channel and the right surround channel, a surround effect may be affected. Therefore, in a preferred embodiment of this application, the low-frequency channel is superimposed on only the left channel, the right channel, and the center channel. Optionally, if unprocessed audio source data includes only the left channel, the right channel, the left surround channel, the right surround channel, and the center channel, the electronic device 100 may directly extract data of a corresponding channel of the audio source data to obtain the first audio data and the second audio data.

If the first mode is the surround enhancement mode, the electronic device 100 may extract the data of the left surround channel and the data of the right surround channel from the 5.1-channel audio source data, to obtain the second audio data. The electronic device 100 may sequentially superimpose the low-frequency channel and the center channel of the audio source data on the left channel and the right channel; and then extract the data of the left channel and the data of the right channel of processed audio source data, to obtain the first audio data. Optionally, if unprocessed audio source data includes only the left channel, the right channel, the left surround channel, and the right surround channel, the electronic device 100 may directly extract data of a corresponding channel of the audio source data to obtain the first audio data and the second audio data.

If the first mode is the rhythm enhancement mode, the electronic device 100 may downmix the left channel, the right channel, the left surround channel, the right surround channel, and the center channel of the 5.1-channel audio source data by using a downmixing algorithm, to obtain the data of the left channel and the data of the right channel. Processed audio source data includes only the left channel, the right channel, and the low-frequency channel. Then, the electronic device 100 may extract the data of the left channel and the data of the right channel of the processed audio source data, to obtain the first audio data. The electronic device 100 may further extract the data of the low-frequency channel of the processed audio source data, to obtain the second audio data including the low-frequency channel. Optionally, if unprocessed audio source data includes only the left channel, the right channel, and the low-frequency channel, the electronic device 100 may directly extract data of a corresponding channel of the audio source data to obtain the first audio data and the second audio data.

If the first mode is the dialogue enhancement mode, the electronic device 100 may downmix the left channel, the right channel, the left surround channel, the right surround channel, and the low-frequency channel of the 5.1-channel audio source data by using a related downmixing algorithm, to obtain the data of the left channel and the data of the right channel. Processed audio source data includes only the left channel, the right channel, and the center channel. Then, the electronic device 100 may extract the data of the left channel and the data of the right channel of the processed audio source data, to obtain the first audio data. The electronic device 100 may further extract the data of the center channel of the processed audio source data, to obtain the second audio data including the center channel. Optionally, if unprocessed audio source data includes only the left channel, the right channel, and the center channel, the electronic device 100 may directly extract data of a corresponding channel of the audio source data to obtain the first audio data and the second audio data.

If the first mode is the loudness enhancement mode, the electronic device 100 may downmix the 5.1-channel audio source data by using a related downmixing algorithm, to obtain audio source data including only the left channel and the right channel. The electronic device 100 may use the processed audio source data as the first audio data and the second audio data.

If the first mode is the intelligent enhancement mode, the sound effect mode supported by the electronic device 100 and the electronic device 200 includes the all-around enhancement mode, the surround enhancement mode, the dialogue enhancement mode, the loudness enhancement mode, and the rhythm enhancement mode. When the electronic device 100 plays an audio, the intelligent enhancement mode may be the combination of the rhythm enhancement mode and the loudness enhancement mode. The electronic device 100 may process the audio source data based on the rhythm enhancement mode, to obtain the data of the low-frequency channel; and process the audio source data based on the loudness enhancement mode, to obtain the data of the left channel and the data of the right channel. The electronic device 100 may send the second audio data including the data of the low-frequency channel, the data of the left channel, and the data of the right channel to the electronic device 200.

When the electronic device 100 plays a video, the intelligent enhancement mode may be the combination of the surround enhancement mode and the dialogue enhancement mode. The electronic device 100 may process the audio source data based on the dialogue enhancement mode, to obtain the data of the center channel; and process the audio source data based on the surround enhancement mode, to obtain the data of the left surround channel and the data of the right surround channel. The electronic device 100 may send the second audio data including the data of the center channel, the data of the left surround channel, and the data of the right surround channel to the electronic device 200.

Similarly, if the sound effect mode supported by the electronic device 100 and the electronic device 200 includes the dialogue enhancement mode, the rhythm enhancement mode, and the loudness enhancement mode, the intelligent enhancement mode may be the combination of the rhythm enhancement mode and the loudness enhancement mode. The electronic device 100 may process the audio source data based on the rhythm enhancement mode, to obtain the data of the low-frequency channel; and process the audio source data based on the loudness enhancement mode, to obtain the data of the left channel and the data of the right channel. The electronic device 100 may send the second audio data including the data of the low-frequency channel, the data of the left channel, and the data of the right channel to the electronic device 200.

In some embodiments, the electronic device 100 may process the audio source data based on all supported sound effect modes, to obtain data of all channels of all the sound effect modes supported by the electronic device 100 and the electronic device 200. The electronic device 100 may send the data of all channels (which may be collectively referred to as the second audio data) to the electronic device 200. The electronic device 100 may further send a current sound effect mode to the electronic device 200, and the electronic device 200 may play data of a corresponding channel based on the current sound effect mode. Alternatively, the electronic device 100 may determine, based on a currently selected sound effect mode, channels included in audio data played by the electronic device 200, and indicate the electronic device 200 to play data of the corresponding channels. In this way, the electronic device 100 may send, to the electronic device 200, all data of different channels that may be used by the electronic device 200, and the electronic device 200 may play, based on a current sound effect mode, audio data of a channel indicated by the sound effect mode. Alternatively, the electronic device 100 may indicate, based on the sound effect mode, the electronic device 200 to play data of one or more channels. When the sound effect mode of the electronic device 100 changes, the electronic device 100 does not need to process the audio source data based on a modified sound effect mode, and the electronic device 200 may directly play audio data corresponding to the modified sound effect mode.

For example, if the sound effect mode supported by the electronic device 100 and the electronic device 200 includes the all-around enhancement mode, the surround enhancement mode, the dialogue enhancement mode, the loudness enhancement mode, and the rhythm enhancement mode, the second audio data sent by the electronic device 100 to the electronic device 200 includes the data of the left channel, the data of the right channel, the data of the left surround channel, the data of the right surround channel, the data of the center channel, and the data of the low-frequency channel that are obtained based on the plurality of sound effect modes. For example, when the electronic device 100 is in the intelligent enhancement mode, when playing a video, the electronic device 100 may indicate the electronic device 200 to play the data of the left surround channel, the data of the right surround channel, and the data of the center channel. For another example, when the electronic device 100 is in the rhythm enhancement mode, the electronic device 100 is indicated to play the data of the low-frequency channel. S306: The electronic device 100 sends the second audio data to the electronic device 200.

The electronic device 100 may send the second audio data to the electronic device 200 after obtaining the first audio data and the second audio data. The electronic device 100 may play the first audio data, and the electronic device 200 may play the second audio data.

In some embodiments, after receiving the second audio data, the electronic device 200 may further perform an audio processing operation on the second audio data, and then play processed second audio data. For example, the audio processing operation may be adjusting loudness of the second audio data.

In some examples, the electronic device 200 may identify a small-signal audio in the second audio data based on an amplitude of the second audio data, and improve loudness of a weak sound. The small-signal audio is an audio signal whose loudness is within a range of -35 dB or below in the second audio data. In this way, because the small-signal audio has small loudness and is not easy to be perceived by a human ear, if the loudness of the small-signal audio is improved, the user can listen to the small-signal audio more clearly, and the user can perceive more audio details. For example, if the second audio data is audio data of a game application, the small-signal audio may be a sound that is of a game character and that causes an environment change in a game scenario (for example, a rustling sound of the game character passing through the grass, a footstep sound of the game character, or a sound of a passing car). The electronic device 200 may increase volume of the small-signal audio, to enhance a sense of immersion of the game, and improve game experience of the user. For another example, if the second audio data is audio data provided by a video application, the small-signal audio may be an ambient sound (for example, an insect sound, a bird sound, or a wind sound) in a video. In a preferred solution of this application, the electronic device 200 performs the audio processing operation on the second audio data only when the electronic device 100 is in the loudness enhancement mode.

In some embodiments, when playing a video, the electronic device 100 may identify positions of a plurality of characters in a video picture by using a video identification algorithm, and may extract human voice data of the characters at the positions from audio source data of the video. Therefore, the electronic device 100 may obtain second audio data that includes human voice data (namely, data of a center channel) of one or more characters that are close to the display in the video picture, and obtain first audio data that includes human voice data (namely, data of a center channel) of one or more characters that are far away from the display in the video picture. In this way, a distance between the electronic device 100 and the user is longer than a distance between the electronic device 200 and the user. The electronic device 100 plays a human voice of a character farther away from the display, and the electronic device 200 plays a human voice of a character closer to the display, so that the user can feel human voices at different positions, to improve a sense of immersion of the user during video watching.

It should be noted that, the first audio data includes human voice data of at least one character, and the second audio data includes human voice data of all characters other than the character corresponding to the human voice data of the first audio data. That the video picture includes three characters is used as an example. The electronic device 100 may place, into the second audio data, human voice data of one character closest to the display, and place human voice data of the other two characters into the first audio data. Alternatively, the electronic device 100 may place, into the second audio data, human voice data of two characters closest to the display, and place human voice data of another character into the first audio data. This is not limited in embodiments of this application.

In some examples, the audio source data includes a plurality of center channels, and the plurality of center channels are in a one-to-one correspondence with characters in the video picture. Data of one center channel is human voice data of one character in the video picture. The electronic device 100 may identify positions of characters in the video picture, to obtain the second audio data that includes the human voice data (namely, the data of the center channel) of the one or more characters that are close to the display in the video picture, and obtain the first audio data that includes the human voice data (namely, the data of the center channel) of the one or more characters that are far away from the display in the video picture.

In some examples, when playing the audio source data of the video, the electronic device 100 may determine whether the played video is related to a music scenario. The music scenario may include but is not limited to a concert scenario, a music video (music video, MV) scenario, a singing competition scenario, a performance scenario, and the like. When determining that the video is related to the music scenario, the electronic device 100 may set the intelligent enhancement mode to the combination of the rhythm enhancement mode and the loudness enhancement mode. When determining that the video is not related to the music scenario, the electronic device 100 may set the intelligent enhancement mode to the combination of the dialogue enhancement mode and the surround enhancement mode.

In some examples, the electronic device 100 may determine, based on a name of the video, whether the video is related to the music scenario. For example, when the name of the video includes but is not limited to music-related words such as "sing", "music", "play", and "song", it is determined that the video is related to the music scenario.

In some other examples, the electronic device 100 may identify, by using an image identification algorithm, whether an action like singing a song or playing an instrument is performed by a character in the video picture. When identifying that the character in the video picture is playing an instrument or singing a song, the electronic device 100 may determine that the video is related to the music scenario.

It should be noted that the audio source data may be audio data in a video file, or the audio source data may be audio data in an audio file corresponding to the video file.

It should be further noted that the audio source data may be stored in a memory of the electronic device 100, or the audio source data may be obtained by the electronic device 100 from another electronic device (for example, a server or the electronic device 200).

In some embodiments, when the electronic device 100 and the electronic device 200 collaboratively play the audio source data, the electronic device 100 and the electronic device 200 may adjust volume of the electronic device 100 and volume of the electronic device 200 at the same time after receiving a volume adjustment input. In this way, when the electronic device 100 and the electronic device 200 jointly play the audio source data, a case in which volume of sounds heard by the user is inconsistent, and even a sound of an electronic device with lower volume cannot be heard because volume of one electronic device decreases (or increases) and volume of the other electronic device remains unchanged does not occur.

For example, when receiving a volume increase (or decrease) input, the electronic device 100 may increase (or decrease) amplitudes of the first audio data and the second audio data that is sent to the electronic device 200, to achieve an effect of increasing (or decreasing) volume of the electronic device. Alternatively, when receiving a volume adjustment input, the electronic device 100 may set the volume of the electronic device 100 to an adjusted volume value by using a system service (for example, a volume adjustment service). In addition, the electronic device 100 may send the adjusted volume value to the electronic device 200, and the electronic device 200 may also set the volume to the adjusted volume value.

In some embodiments, the electronic device 100 may adjust, based on a distance between the electronic device 100 and the electronic device 200, volume of playing the first audio data by the electronic device 100. In this way, when the user wears the electronic device 200, the distance between the electronic device 200 and the electronic device 100 changes due to a movement of the user. The electronic device 100 may ensure listening experience of the user by adjusting playing volume, so that the user does not hear a sudden decrease or increase of a sound of the electronic device 100.

Specifically, the electronic device 100 may obtain the distance between the electronic device 100 and the electronic device 200. For example, the electronic device 100 may obtain the distance between the electronic device 100 and the electronic device 200 in a manner like Wi-Fi ranging. The electronic device 100 may increase the volume of the electronic device 100 when detecting that the distance between the electronic device 100 and the electronic device 200 increases. The electronic device 100 may decrease the volume of the electronic device 100 when detecting that the distance between the electronic device 100 and the electronic device 200 decreases.

In some other embodiments, the electronic device 100 may adjust, based on the distance between the electronic device 100 and the electronic device 200, volume of playing the second audio data by the electronic device 200. For example, the electronic device 100 may adjust, by adjusting an amplitude of the second audio data, the volume of playing the second audio data by the electronic device 200.

The following describes, with reference to an application scenario, an example of the audio playing method according to embodiments of this application.

In some application scenarios, the audio playing method according to embodiments of this application is described by using an example in which the electronic device 200 is smart glasses.

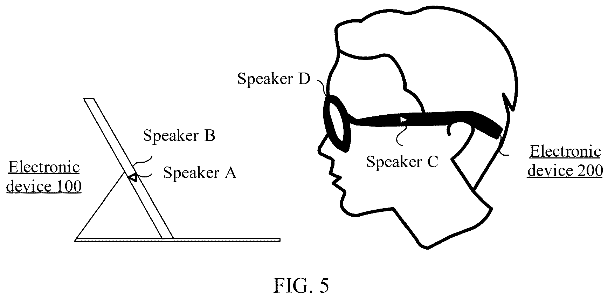

As shown in FIG. 5, the electronic device 100 may be a tablet computer, and the electronic device 200 is smart glasses. It should be noted that, not limited to the tablet computer, the electronic device 100 may alternatively be another electronic device including a display and a plurality of speakers, for example, a mobile phone.

The electronic device 100 includes one or more speakers, and the one or more speakers include a speaker A and a speaker B. The speaker A is located on a left side of the display, and the speaker B is located on a right side of the display. The electronic device 200 includes one or more speakers, and the one or more speakers include a speaker C and a speaker D. When the electronic device 200 is worn, the speaker C is located near a left ear of a user, and the speaker D is located near a right ear of the user. Both the electronic device 100 and the electronic device 200 support playing of audio data including left and right channels. It should be noted that, due to a limitation of a depicted angle of view in FIG. 5, the speaker B and the speaker D are blocked and cannot be shown in FIG. 5.

Steps of playing audio data by the electronic device 100 and the electronic device 200 in a first mode are as follows:
The electronic device 100 and the electronic device 200 enable a Bluetooth function. The electronic device 100 may display one or more Bluetooth device options in a Bluetooth interface. The Bluetooth device option may represent a nearby found Bluetooth device, and may be used to trigger the electronic device 100 to establish a communication connection to an electronic device corresponding to the Bluetooth device option. The one or more Bluetooth device options include a Bluetooth device option used to trigger establishment of a Bluetooth connection to the electronic device 200.

The electronic device 100 may establish a Bluetooth connection to the electronic device 200 in response to an input for the Bluetooth device option used to trigger establishment of a Bluetooth connection to the electronic device 200. The Bluetooth connection is merely an example. Not limited to the Bluetooth connection, the electronic device 100 and the electronic device 200 may alternatively establish another wireless or wired communication connection. This is not limited in embodiments of this application.

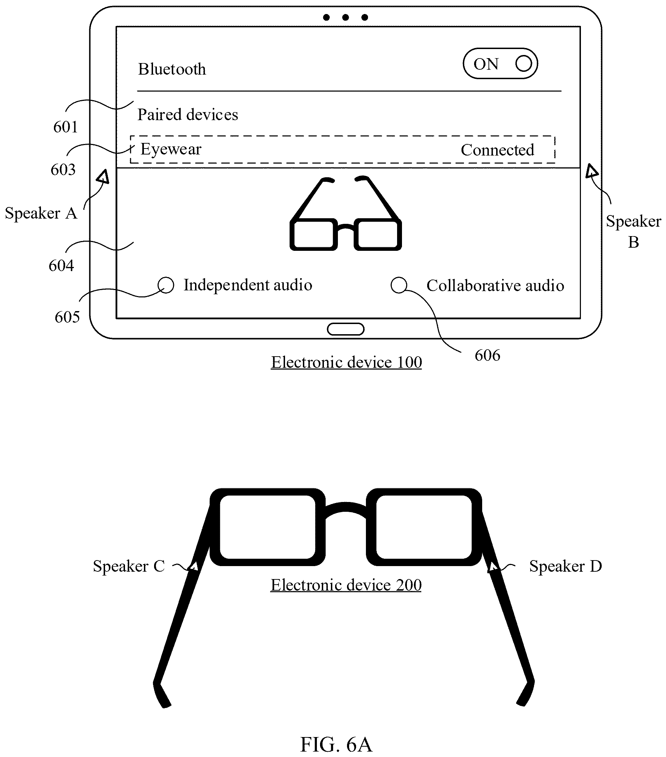

After establishing the Bluetooth connection to the electronic device 200, the electronic device 100 may display a Bluetooth interface 601 shown in FIG. 6A.

For example, as shown in FIG. 6A, the Bluetooth interface 601 displayed by the electronic device 100 may include one or more Bluetooth device options. The one or more Bluetooth device options include a Bluetooth device option 603. The Bluetooth device option 603 may further display a device name of the electronic device 200. Herein, the device name of the electronic device 200 is "Eyewear". Optionally, the Bluetooth device option 603 may further display connection status information. The connection status information may indicate a connection status (for example, disconnected or connected) between the electronic device 100 and the electronic device 200. Herein, the connection status is connected.

The Bluetooth interface 601 may further include a tab 604, and the tab 604 includes an independent audio option 605 and a collaborative audio option 606. The independent audio option 605 may be used to trigger the electronic device 100 to play a sound by using the electronic device 200. The collaborative audio option 606 may be used to trigger the electronic device 100 to play a sound by using both the electronic device 100 and the electronic device 200. Optionally, the tab 604 may further display a device image of the electronic device 200.

The electronic device 100 may receive an input (for example, a tap) for the collaborative audio option 606, and determine, in response to the input, one or more sound effect modes supported by the electronic device 100 and the electronic device 200. The electronic device 100 may determine, based on the device name of the electronic device 200, that a device type of the electronic device 200 is smart glasses, and determine one or more sound effect modes based on the device type of the electronic device 200. For specific descriptions of determining the one or more sound effect modes, refer to the foregoing embodiment. Details are not described herein again.

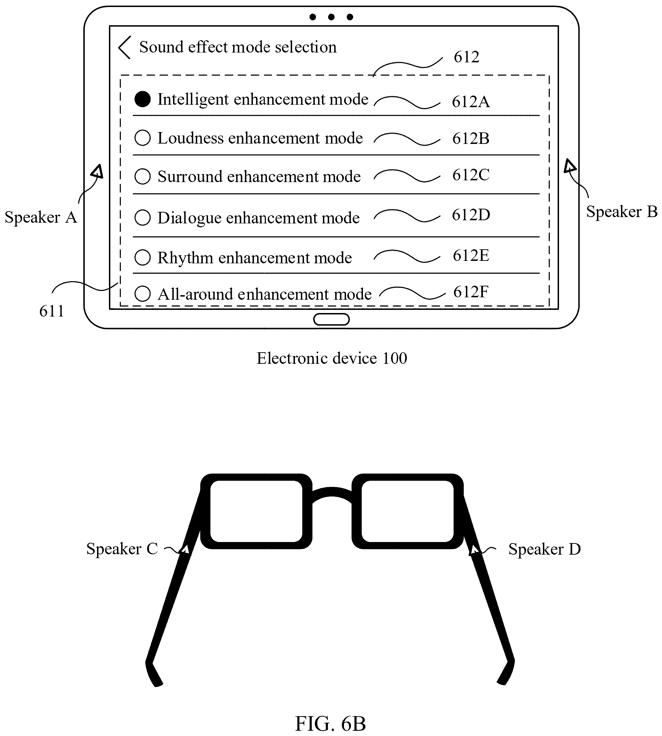

After determining the one or more audio modes supported by the electronic device 100 and the electronic device 200, the electronic device 100 may display a sound effect selection interface 611 shown in FIG. 6B.

As shown in FIG. 6B, the electronic device 100 displays the sound effect selection interface 611. The sound effect selection interface 611 includes a sound effect mode list 612, the sound effect mode list 612 includes one or more sound effect mode options, and the one or more audio options correspond to the one or more sound effect modes determined by the electronic device 100. The sound effect mode option may include an identifier of a sound effect mode, and the sound effect mode option may be used to trigger the electronic device 100 to process audio source data based on the sound effect mode indicated by the sound effect mode option. The one or more sound effect mode options may include but are not limited to a sound effect mode option 612A, a sound effect mode option 612B, a sound effect mode option 612C, a sound effect mode option 612D, a sound effect mode option 612E, and a sound effect mode option 612F. The sound effect mode option 612A corresponds to an intelligent enhancement mode, the sound effect mode option 612B corresponds to a loudness enhancement mode, the sound effect mode option 612C corresponds to a surround enhancement mode, the sound effect mode option 612D corresponds to a dialogue enhancement mode, the sound effect mode option 612E corresponds to a rhythm enhancement mode, and the sound effect mode option 612F corresponds to an all-around enhancement mode. The one or more sound effect mode options may include a name of a corresponding sound effect mode. For a description of each sound effect mode, refer to the embodiment shown in FIG. 3. Details are not described herein again. Herein, the sound effect mode option 612A is in a selected state. Optionally, the sound effect selection interface 611 may further include a back control, and the back control may be used to trigger the electronic device 100 to back to a previous-level interface.

The following describes subsequent steps by using an example in which the sound effect mode option A is selected. For example, after the sound effect mode option A of the electronic device 100 is selected, the electronic device 100 may receive an input for returning to a home screen, and display the home screen including one or more application icons. The one or more application icons may include a music application icon. The electronic device 100 may receive an input for the music application icon, and display a music playing interface 621.

The music playing interface 621 may include but is not limited to a song name, a play control, and the like. The play control may be used to trigger the electronic device 100 to play a song indicated by the song name.

After receiving an input for the play control, the electronic device 100 processes, in response to the input, audio source data (namely, audio data of the song) based on the intelligent enhancement mode, to obtain first audio data and second audio data. For a description of processing the audio source data by the electronic device 100 based on a sound effect mode, refer to the embodiment shown in FIG. 4A and FIG. 4B. Details are not described herein again.

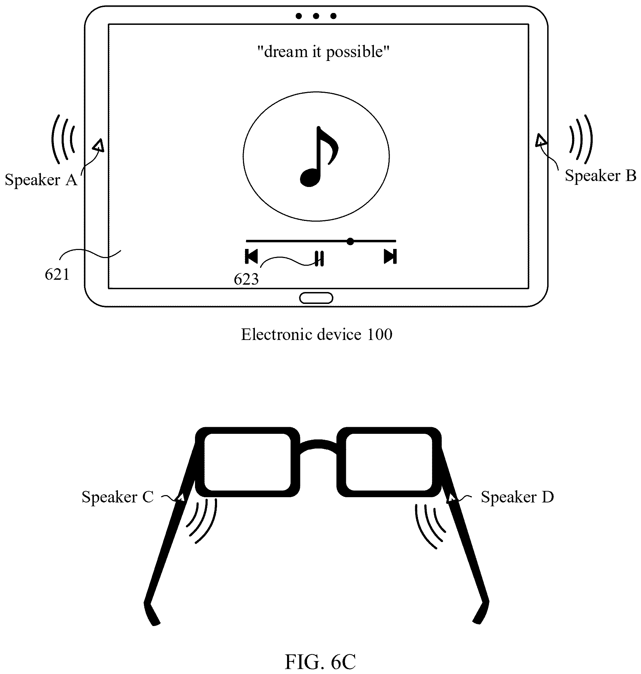

The electronic device 100 may send the second audio data to the electronic device 200 after obtaining the first audio data and the second audio data. The electronic device 100 and the electronic device 200 may simultaneously start to play respective audio data, as shown in FIG. 6C. The electronic device 100 plays the first audio data by using the speaker A and the speaker B, and the electronic device 200 plays the second audio data by using the speaker C and the speaker D. It may be understood that, the electronic device 100 is playing a song, and the electronic device 100 cancels displaying the play control and displays a pause control 623. The pause control 623 may be used to trigger the electronic device 100 and the electronic device 200 to stop playing the audio data.

In this way, the electronic device 100 may provide a plurality of sound effect modes for the user, to implement different audio playing effects, and improve user experience.

In some examples, if the electronic device 200 includes only one speaker, the sound effect mode supported by the electronic device 100 and the electronic device 200 is the dialogue enhancement mode, the loudness enhancement mode, or the rhythm enhancement mode. The electronic device 100 displays only a sound effect mode option corresponding to the intelligent enhancement mode, the dialogue enhancement mode, or the rhythm enhancement mode.

In some other examples, if the electronic device 200 includes at least three speakers that are respectively located on the left and right frame temples and the nose pad, the sound effect mode supported by the electronic device 100 and the electronic device 200 is the all-around sound effect mode. The electronic device 200 may play the data of the center channel of the second audio data by using a speaker at the nose pad, play the data of the left channel of the second audio data by using a speaker near the left ear of the user, and play the data of the right channel of the second audio data by using a speaker near the right ear of the user. The electronic device 100 may display only sound effect mode options corresponding to the intelligent enhancement mode and the all-around enhancement mode.

In some embodiments, when displaying the one or more sound effect mode options, the electronic device 100 may further display a percentage bar. The percentage bar may be used to control the electronic device 100 to adjust the second audio data based on a value in the percentage bar when processing the audio source data to obtain the second audio data. In this way, the electronic device 100 may receive adjustment of the percentage bar by the user, set an implementation effect of the sound effect mode, and select a sound effect mode with an appropriate implementation effect.

For example, in the loudness enhancement mode, an amplitude of the second audio data of the electronic device 200 may be changed by changing the value in the percentage bar, to adjust volume of playing the second audio data by the electronic device 200. A larger value in the percentage bar indicates higher volume of playing the second audio data by the electronic device 200, and a smaller value in the percentage bar indicates lower volume of playing the second audio data by the electronic device 200.

In the surround mode, a value of a surround factor in a surround channel processing algorithm may be changed by changing the value in the percentage bar, to adjust a playing effect of a surround sound effect. A larger value of the surround factor indicates a farther distance between the user and a position of a virtual audio source simulated by the data of the surround channel, and a clearer surround effect. To be specific, as the surround factor increases, when the user listens to the data of the surround channel played by the electronic device 200, the user perceives that the distance between the user and the audio source also increases accordingly. A larger value in the percentage bar indicates a larger value of the surround factor and a clearer surround effect. A smaller value in the percentage bar indicates a smaller value of the surround factor and an unclearer surround effect.

In the dialogue enhancement mode, an amplitude of the second audio data of the electronic device 200 may be changed by changing the value in the percentage bar, to adjust volume of playing the second audio data by the electronic device 200. A larger value in the percentage bar indicates higher volume of playing the second audio data by the electronic device 200, and a clearer human voice. A smaller value in the percentage bar indicates lower volume of playing the second audio data by the electronic device 200, and an unclearer human voice.

In the rhythm enhancement mode, an amplitude of the second audio data of the electronic device 200 may be changed by changing the value in the percentage bar, to adjust volume of playing the second audio data by the electronic device 200. A larger value in the percentage bar indicates higher volume of playing the second audio data by the electronic device 200, and a clearer low frequency. A smaller value in the percentage bar indicates lower volume of playing the second audio data by the electronic device 200, and an unclearer low frequency. In some examples, the electronic device 200 may control the motor to vibrate based on the second audio data. Vibration intensity of the motor is determined by the amplitude of the second audio data. When the electronic device 100 adjusts the amplitude of the second audio data based on the value in the percentage bar, the vibration intensity of the electronic device 200 changes accordingly.

In the all-around enhancement mode, an amplitude of the second audio data of the electronic device 200 may be changed by changing the value in the percentage bar, to adjust volume of playing the second audio data by the electronic device 200. In addition, a value of a surround factor in a surround channel processing algorithm is changed, to adjust a playing effect of a surround sound effect. For specific descriptions of adjusting the amplitude and the surround factor based on the value in the percentage bar, refer to the foregoing embodiment. Details are not described herein again.

In the intelligent enhancement mode, the electronic device 100 may synchronously adjust a plurality of sound effect modes in the intelligent enhancement mode based on the value in the percentage bar.

In this way, loudness, a surround sound range, vibration intensity, and the like of the second audio data played by the electronic device 200 may be adjusted based on a percentage value.

It should be noted that the value in the percentage bar is always greater than zero, and the electronic device 100 and the electronic device 200 play corresponding audio data in a sound effect mode.

In some examples, the percentage bar of the electronic device 100 is divided into 10 equal parts, and the electronic device 100 may set an initial value in a percentage bar of each sound effect mode to 50%. If the value in the percentage bar is adjusted to be greater than 50%, a channel processing manner in a corresponding sound effect mode increases based on an influence factor. If the value in the percentage bar is adjusted to be less than 50%, a channel processing manner in a corresponding sound effect mode decreases based on the influence factor.

For example, in a surround sound field mode, the influence factor may be understood as the surround factor in the surround channel processing algorithm. When the value in the percentage bar is 50%, and the value in the percentage bar is adjusted to 100%, the value of the surround factor in the surround channel processing algorithm may increase according to a preset correspondence, to enhance an extension effect of the surround channel. The extension effect is better than an effect of the sound effect mode in which the value in the percentage bar is 50%. When the value in the percentage bar is adjusted to 10%, the value of the surround factor in the surround channel processing algorithm may decrease according to the preset correspondence, to weaken the extension effect of the surround channel. The extension effect is worse than an effect of the sound effect mode in which the value in the percentage bar is 50%.

In this way, when the value in the percentage bar is a minimum value of a current sound effect mode, that is, 10%, in a case in which a collaborative sound emission mode is not enabled, even if a surround effect of the surround sound effect is worse than the effect of the sound effect mode in which the value in the percentage bar is 50%, when the electronic device 100 and the electronic device 200 jointly play audio data, user experience is better than that when a single electronic device separately plays the audio data.

For another example, in the loudness enhancement mode, the dialogue enhancement mode, and the rhythm enhancement mode, when the value in the percentage bar is 50%, loudness of the second audio data is 5 dB. When the value in the percentage bar is adjusted to be less than 50%, for example, 20%, the loudness of the second audio data is adjusted to 2 dB. Herein, the influence factor may be considered as a loudness factor. When the value in the percentage bar is 20%, a value of the loudness factor is 0.4.

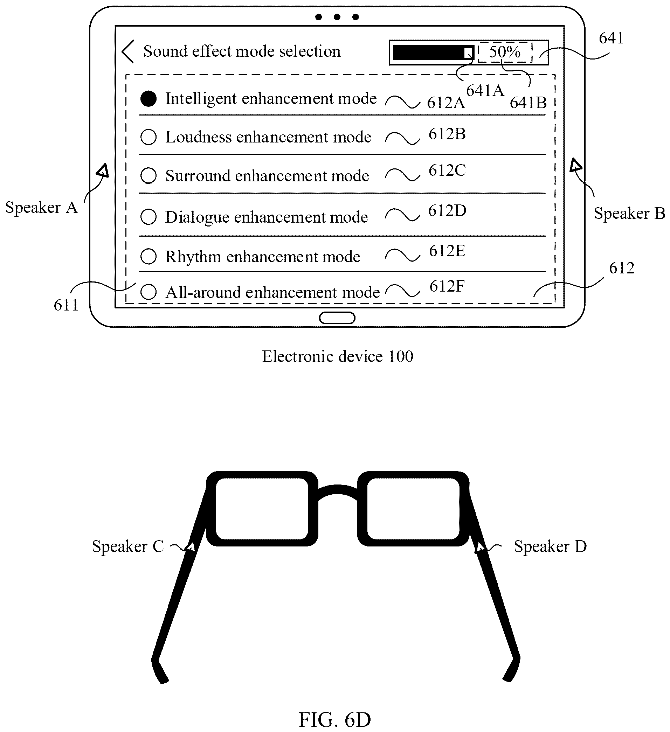

For example, as shown in FIG. 6D, the electronic device 100 may display a percentage bar 641 when displaying the one or more sound effect mode options. The percentage bar 641 may be used to change intensity of the sound effect mode selected by the electronic device 100. The percentage bar 641 may include a slider 641A. The electronic device 100 may receive an input for dragging the slider 641A to the left by the user, to reduce intensity of the sound effect mode. The electronic device 100 may receive an input for dragging the slider 641A to the right by the user, to increase intensity of the sound effect mode. It may be understood that for a specific operation of reducing/increasing the intensity of the sound effect mode, refer to the foregoing embodiment. Details are not described herein again.

Optionally, the percentage bar 641 may further include value information 641B, and the value information 641B may represent a value in the percentage bar, to prompt the user of an effect of a current sound effect mode.

Herein, a value of the value information 641B of the percentage bar 641 of the electronic device 100 is a default value 50%. The electronic device 100 may directly send the second audio data to the electronic device 200, and the electronic device 200 may play the second audio data.

The electronic device 100 may decrease the value in the percentage bar 641 when receiving the input for dragging the slider 641A to the left. For example, the value of the value information 641B is reduced to 20%, and the electronic device 100 may process the second audio data based on the value in the percentage bar, and then send the second audio data to the electronic device 200. The electronic device 200 may play the processed second audio data. It may be understood that a surround sound effect in a scenario in which the value in the percentage bar is 50% is stronger than a surround sound effect in a scenario in which the value in the percentage bar is 20%. For example, in the scenario shown in FIG. 6D, a distance between a simulated virtual audio source and the user may be 20 cm, so that the user perceives that a width of a sound of the audio source extends a distance of 0.2 m to the left and right along a central axis of the electronic device 100. After the value in the percentage bar is decreased from 50% to 20%, the distance between the user and the virtual audio source simulated by data of a virtual channel may be 50 cm, so that the user perceives that the width of the sound of the audio source extends a distance of 0.5 m to the left and right along the central axis of the electronic device 100. A farther distance between the user and the virtual audio source indicates a clearer surround effect. It may be understood that the correspondence between the value in the percentage bar and the value of the distance is merely an example. In a specific implementation, the distance may be another value. This is not limited in embodiments of this application.

In a possible implementation, the electronic device 100 may process the first audio data based on the pose data of the electronic device 200 when relative positions of the electronic device 200 and the electronic device 100 change, so that the user perceives that the audio source is located right in front of the line of sight of the user. Alternatively, the second audio data is processed based on the pose data of the electronic device 200, so that the user perceives that the audio source is located at the electronic device 100. In this way, the user can perceive a position of the audio source, and a better sense of space is brought to the user.

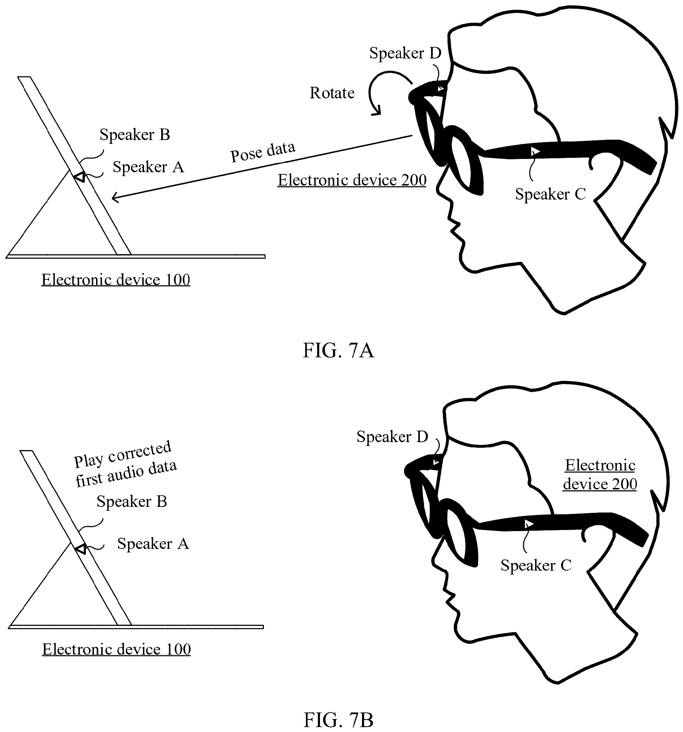

As shown in FIG. 7A, relative positions of the electronic device 200 and the electronic device 100 change. Herein, a reason for the position change is that a position of the electronic device 200 changes because the head of the user rotates. The electronic device 200 may send the pose data of the electronic device 200 to the electronic device 100. The electronic device 100 may obtain an angle coefficient based on the pose data. The angle coefficient may represent an orientation of the electronic device 200 relative to the electronic device 100.

This is not limited to that the relative positions of the electronic device 200 and the electronic device 100 change due to a position movement of the electronic device 200, and the relative positions of the electronic device 200 and the electronic device 100 change due to a position movement of the electronic device 100. The electronic device 100 may obtain the angle coefficient based on the pose data of the electronic device 200. Optionally, the electronic device 100 may obtain the angle coefficient based on pose data of the electronic device 100 and the pose data of the electronic device 200.

In some examples, the electronic device 100 may change a phase difference between the data of the left channel and the data of the right channel of the first audio data by using the angle coefficient, so that the user feels that the audio source is located in front of the line of sight of the user when hearing the sound played by the electronic device 100.

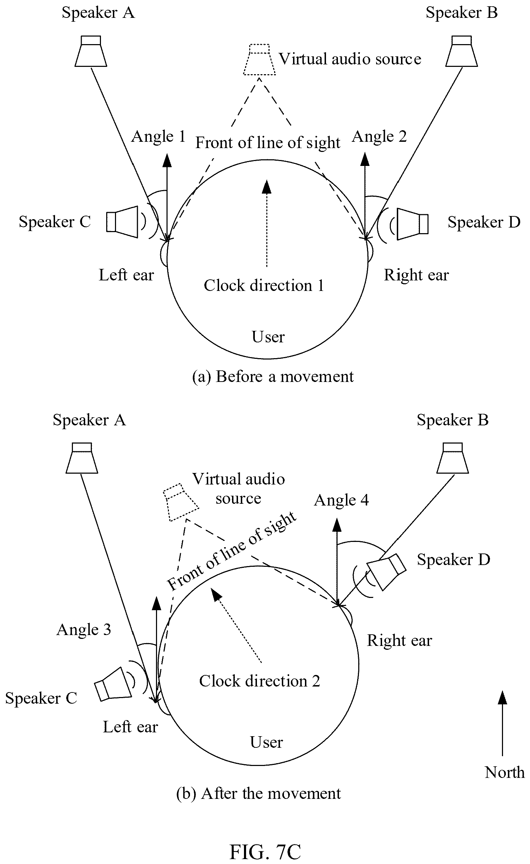

Specifically, when the electronic device 200 moves from the position shown in FIG. 5 to the position shown in FIG. 7A, the electronic device 100 may obtain the angle coefficient based on the pose data of the electronic device 200, and then process the first audio data based on the angle coefficient, to obtain corrected first audio data. The electronic device 100 plays the first audio data corrected based on the angle coefficient, so that the user feels that the audio source is located in front of the line of sight of the user, as shown in FIG. 7B. When the electronic device 200 is in the position shown in FIG. 5, the first audio data played by the electronic device 100 may enable the user to feel that the audio source is located in front of the line of sight of the user. As shown in (a) in FIG. 7C, the speaker A plays the data of the left channel of the first audio data, the speaker B plays the data of the right channel of the first audio data, and sound wave signals played by the speaker A and the speaker B may enable the user to consider that the audio source is located at a virtual audio source shown in (a) in FIG. 7C.

When the electronic device 200 is in the position shown in FIG. 7A or FIG. 7B, the corrected first audio data played by the electronic device 100 may also enable the user to feel that the audio source is located in front of the line of sight of the user. As shown in (b) in FIG. 7C, the speaker A plays the data of the left channel of the first audio data, the speaker B plays the data of the right channel of the first audio data, and sound wave signals played by the speaker A and the speaker B may enable the user to consider that the audio source is located at a virtual audio source shown in (b) in FIG. 7C. It may be understood that a position of the virtual audio source shown in (a) in FIG. 7C is the same as a position of the virtual audio source shown in (b) in FIG. 7C. In this way, it can be ensured that the user can hear a sound from the front of the line of sight regardless of how the user moves.

In other words, the electronic device 100 may process the first audio data based on the relative positions of the electronic device 100 and the electronic device 200, so that a virtual audio source simulated by a sound signal of the electronic device 100 is always located in front of the line of sight of the user. In this way, the virtual audio source may be always located in front of the line of sight of the user, so that the user has audio playing experience in which the sound always moves with the user. In some examples, the electronic device 100 may adjust, based on the relative position relationship, one or more of amplitudes of and a phase difference between the data of the left channel and the data of the right channel that are played by the electronic device 100, to obtain the virtual audio source that is simulated by the sound signal of the electronic device 100 and that is located in front of the line of sight of the user.

In some embodiments, the electronic device 100 may adjust a beam direction of a sound signal of a speaker of the electronic device 100, so that the sound signal faces a direction of the electronic device 200. In this way, because the user wears the electronic device 200, the beam direction of the sound signal of the electronic device 100 is adjusted to align with the direction of the electronic device 200, so that the user can listen to the sound signal played by the electronic device 100.

For example, as shown in (a) in FIG. 7C, a beam change of a sound of the electronic device 100 before and after a movement is described by using an example in which a north direction is used as a reference direction. The electronic device 100 is located in a clock orientation 1 (for example, a direction of 12 o'clock) of the electronic device 200, and when the electronic device 100 plays the first audio data, an included angle between a beam direction of a sound wave beam sent by the speaker A and the north direction is an angle 1, and an included angle between a beam direction of a sound wave beam sent by the speaker B and the north direction is an angle 2.

As shown in (b) in FIG. 7C, the electronic device 100 is located in a clock direction 2 (for example, a direction of 10 o'clock) of the electronic device 200, and when the electronic device 100 plays the first audio data, an included angle between a beam direction of a sound wave beam sent by the speaker A and the north direction is an angle 3, and an included angle between a beam direction of a sound wave beam sent by the speaker B and the north direction is an angle 4, where the clock orientation 1 is different from the clock orientation 2, the angle 1 is different from the angle 3, and the angle 2 is different from the angle 4. It should be noted that, the north direction is merely used to describe a comparison direction of a beam direction of a sound signal. Not limited to the north direction, any other direction may also be used as the comparison direction. This is not limited in embodiments of this application.

In some other examples, the electronic device 100 may change a phase difference between the data of the left channel and the data of the right channel of the second audio data by using the angle coefficient, so that the user feels that the audio source is located at the electronic device 100 when hearing the sound played by the electronic device 200.

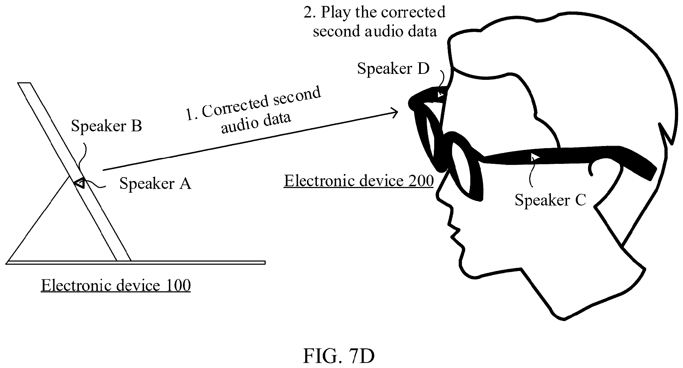

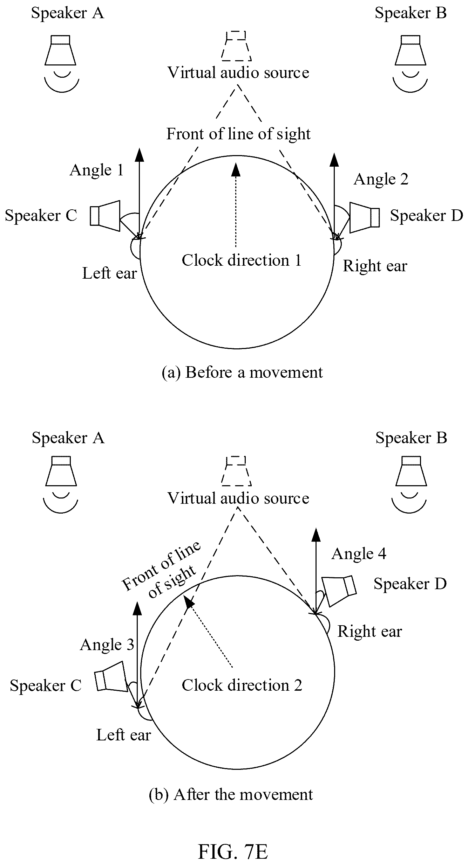

Specifically, when the electronic device 200 moves from the position shown in FIG. 5 to the position shown in FIG. 7A, the electronic device 100 may obtain the angle coefficient based on the pose data of the electronic device 200, and then process the second audio data based on the angle coefficient, to obtain corrected second audio data. The electronic device 100 may send the corrected second audio data to the electronic device 200, and the electronic device 200 may play the second audio data corrected based on the angle coefficient, so that the user feels that the audio source is located at the electronic device 100, as shown in FIG. 7D. When the electronic device 200 is in the position shown in FIG. 5, the second audio data played by the electronic device 200 may enable the user to feel that the audio source is located at the electronic device 100. As shown in (a) in FIG. 7E, the speaker C plays the data of the left channel of the second audio data, the speaker D plays the data of the right channel of the second audio data, and sound wave signals played by the speaker C and the speaker D may enable the user to consider that the audio source is located at a virtual audio source shown in (a) in FIG. 7E.

When the electronic device 200 is in the position shown in FIG. 7A or FIG. 7D, the corrected second audio data played by the electronic device 200 may also enable the user to feel that the audio source is located at the electronic device 100. As shown in (b) in FIG. 7E, the speaker C plays the data of the left channel of the second audio data, the speaker D plays the data of the right channel of the second audio data, and sound wave signals played by the speaker C and the speaker D may enable the user to consider that the audio source is located at a virtual audio source shown in (b) in FIG. 7E. It may be understood that a position of the virtual audio source shown in (a) in FIG. 7E is the same as a position of the virtual audio source shown in (b) in FIG. 7E. In this way, it can be ensured that the user can hear a sound from the front of the line of sight regardless of how the user moves.

In other words, the electronic device 100 may adjust a sound signal of a speaker of the electronic device 200, so that a virtual audio source obtained by simulating a sound signal played by the electronic device 200 is located at the electronic device 100. In this way, regardless of how the user moves, the sound signal emitted by the electronic device 200 may be used to simulate that the virtual audio source is located at the electronic device 100, so that the user considers that the sound is emitted by the electronic device 100. In some examples, the electronic device 100 may adjust, based on a position of the electronic device 200, one or more of a phase difference between and amplitudes of the data of the left channel and the data of the right channel of the second audio data of the electronic device 200, to adjust a position of a virtual audio source obtained by simulating a sound signal played by the electronic device 200.

FIG. 7E is used as an example to describe a relative relationship between a beam direction of a sound signal played by the electronic device 200 and the north direction. As shown in (a) in FIG. 7E, a beam change of a sound of the electronic device 100 before and after a movement is described by using an example in which the north direction is used as a reference direction. The electronic device 100 is located in a clock orientation 1 (for example, a direction of 12 o'clock) of the electronic device 200, and when the electronic device 200 plays the second audio data, an included angle between a beam direction of a sound wave beam sent by the speaker C and the north direction is an angle 1, and an included angle between a beam direction of a sound wave beam sent by the speaker D and the north direction is an angle 2.

As shown in (b) in FIG. 7E, the electronic device 100 is located in a clock direction 2 (for example, a direction of 10 o'clock) of the electronic device 200, and when the electronic device 200 plays the second audio data, an included angle between a beam direction of a sound wave beam sent by the speaker C and the north direction is an angle 3, and an included angle between a beam direction of a sound wave beam sent by the speaker D and the north direction is an angle 4, where the clock orientation 1 is different from the clock orientation 2, the angle 1 is different from the angle 3, and the angle 2 is different from the angle 4. It should be noted that, the north direction is merely used to describe a comparison direction of a beam direction of a sound signal. Not limited to the north direction, any other direction may also be used as the comparison direction. This is not limited in embodiments of this application.

Similarly, the electronic device 100 may adjust a beam direction of a sound signal of the electronic device 100 based on a change of relative positions of the electronic device 100 and the electronic device 200, and set the beam direction to a direction towards the electronic device 200.

It may be understood that, because the electronic device 200 is worn on a body part of the user, the beam direction of the sound signal of the electronic device 200 does not need to be changed, and a beam direction of a sound signal emitted by a speaker of the electronic device 200 always faces the user.

It should be noted that, the electronic device 200 can change the phase difference between the data of the left channel and the data of the right channel of the second audio data and change the position of the virtual audio source only when the electronic device 200 supports stereo playing. Therefore, the electronic device 100 can process the second audio data based on the angle coefficient only when the electronic device 100 plays audio data including the left channel and the right channel, or the electronic device 100 plays audio data including the left surround channel and the right surround channel, so that the user feels that the audio source is located at a position of the electronic device 100. In other words, when the sound effect mode of the electronic device 100 is the all-around enhancement mode, the loudness enhancement mode, the surround enhancement mode, or the intelligent enhancement mode including one or more of the all-around enhancement mode, the loudness enhancement mode, and the surround enhancement mode, the electronic device 100 may process the first audio data based on the angle coefficient, or may process the second audio data based on the angle coefficient. When the sound effect mode of the electronic device 100 is the dialogue enhancement mode, the rhythm enhancement mode, or the intelligent enhancement mode including one or more of the dialogue enhancement mode and the rhythm enhancement mode, the electronic device 100 can process only the first audio data based on the angle coefficient, and cannot process the second audio data based on the angle coefficient.

In some embodiments, the electronic device 200 may send the pose data of the electronic device 200 to the electronic device 100 at a preset interval (for example, 1s), or the electronic device 100 may obtain the pose data of the electronic device 200 from the electronic device 200 at a preset interval. In this way, the electronic device 100 may process the first audio data or the second audio data based on the pose data of the electronic device 200 at the preset interval. In some other embodiments, the electronic device 200 may send the pose data of the electronic device 200 to the electronic device 100 when detecting that the position of the electronic device 200 changes. In this way, power consumption of the electronic device 100 for adjusting the first audio data or the second audio data based on the pose data can be reduced.

In some other application scenarios, the audio playing method according to embodiments of this application is described by using an example in which the electronic device 200 is a smartwatch.

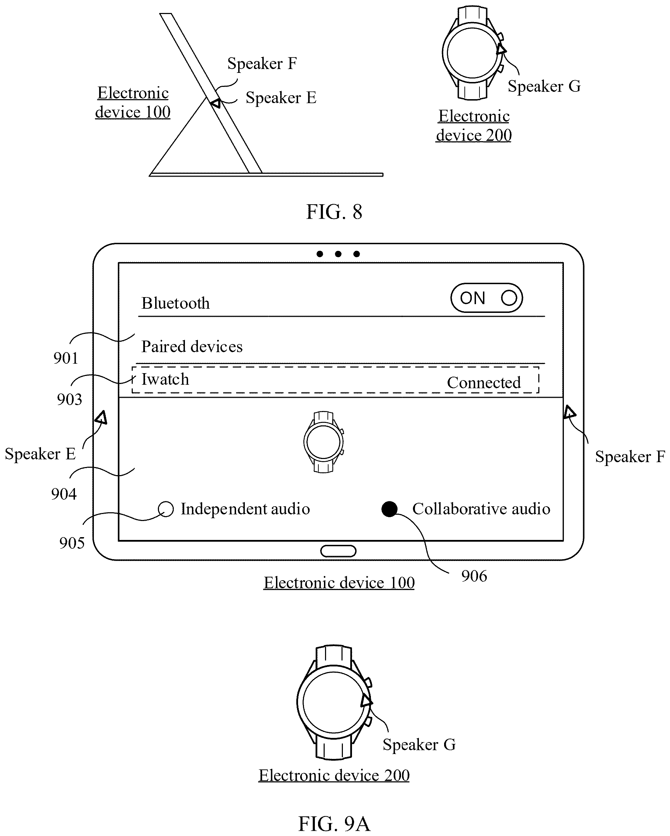

As shown in FIG. 8, the electronic device 100 may be a tablet computer, and the electronic device 200 is a smartwatch. It should be noted that, not limited to the tablet computer, the electronic device 100 may alternatively be another electronic device including a display and a plurality of speakers, for example, a mobile phone.

The electronic device 100 includes one or more speakers, and the one or more speakers include a speaker E and a speaker F. The speaker E is located on a left side of the display, and the speaker F is located on a right side of the display. The electronic device 200 includes at least one speaker, and the at least one speaker includes a speaker G. When the electronic device 200 is worn, the speaker G is located near a wrist of the user. The electronic device 100 supports playing of audio data including left and right channels, and the electronic device 200 supports playing of only audio data of a single channel. It should be noted that, due to a limitation of a depicted angle of view in FIG. 8, the speaker F is blocked, and the speaker F cannot be shown in FIG. 8.

Steps of playing audio data by the electronic device 100 and the electronic device 200 in a first mode are as follows:
The electronic device 100 and the electronic device 200 enable a Bluetooth function. The electronic device 100 may display one or more Bluetooth device options in a Bluetooth interface. The Bluetooth device option may represent a nearby found Bluetooth device, and may be used to trigger the electronic device 100 to establish a communication connection to an electronic device corresponding to the Bluetooth device option. The one or more Bluetooth device options include a Bluetooth device option used to trigger establishment of a Bluetooth connection to the electronic device 200.

The electronic device 100 may establish a Bluetooth connection to the electronic device 200 in response to an input for the Bluetooth device option used to trigger establishment of a Bluetooth connection to the electronic device 200. The Bluetooth connection is merely an example. Not limited to the Bluetooth connection, the electronic device 100 and the electronic device 200 may alternatively establish another wireless or wired communication connection. This is not limited in embodiments of this application.

After establishing the Bluetooth connection to the electronic device 200, the electronic device 100 may display a Bluetooth interface 901 shown in FIG. 9A.

For example, as shown in FIG. 9A, the Bluetooth interface 901 displayed by the electronic device 100 may include one or more Bluetooth device options. The one or more Bluetooth device options include a Bluetooth device option 903. The Bluetooth device option 903 may further display a device name of the electronic device 200. Herein, the device name of the electronic device 200 is "Iwatch". Optionally, the Bluetooth device option 903 may further display connection status information. The connection status information may indicate a connection status (for example, disconnected or connected) between the electronic device 100 and the electronic device 200. Herein, the connection status is connected.

The Bluetooth interface 901 may further include a tab 904, and the tab 904 includes an independent audio option 905 and a collaborative audio option 906. The independent audio option 905 may be used to trigger the electronic device 100 to play a sound independently. The collaborative audio option 906 may be used to trigger the electronic device 100 to play a sound by using both the electronic device 100 and the electronic device 200. Optionally, the tab 904 may further display a device image of the electronic device 200.

The electronic device 100 may receive an input (for example, a tap) for the collaborative audio option 906, and determine, in response to the input, one or more sound effect modes supported by the electronic device 100 and the electronic device 200. For specific descriptions of determining the one or more sound effect modes by the electronic device 100, refer to the foregoing embodiment. Details are not described herein again.

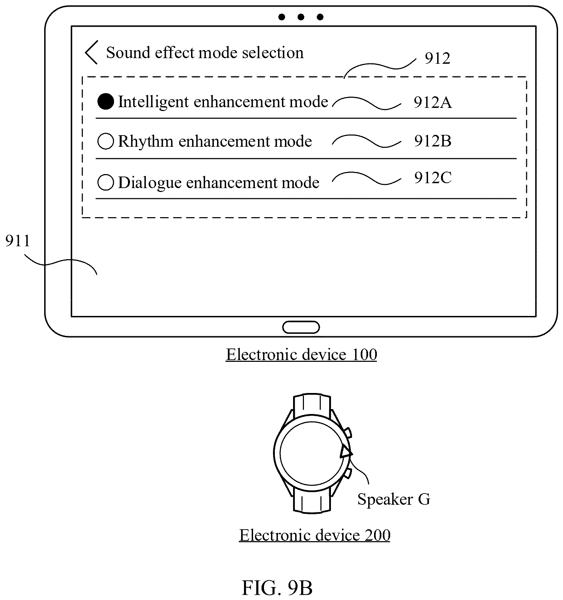

After determining the one or more audio modes supported by the electronic device 100 and the electronic device 200, the electronic device 100 may display a sound effect selection interface 911 shown in FIG. 9B.

As shown in FIG. 9B, the electronic device 100 displays the sound effect selection interface 911. The sound effect selection interface 911 includes a sound effect mode list 912, the sound effect mode list 912 includes one or more sound effect mode options, and the one or more audio options correspond to the one or more sound effect modes determined by the electronic device 100. The sound effect mode option may include an identifier of a sound effect mode, and the sound effect mode option may be used to trigger the electronic device 100 to process audio source data based on the sound effect mode indicated by the sound effect mode option. The one or more sound effect mode options may include but are not limited to a sound effect mode option 912A, a sound effect mode option 912B, and a sound effect mode option 912C. The sound effect mode option A corresponds to an intelligent enhancement mode, the sound effect mode option 912B corresponds to a rhythm enhancement mode, and the sound effect mode option 912C corresponds to a dialogue enhancement mode. For a description of each sound effect mode, refer to the embodiment shown in FIG. 3. Details are not described herein again. Herein, the sound effect mode option A is in a selected state. Optionally, the sound effect selection interface 911 may further include a back control, and the back control may be used to trigger the electronic device 100 to back to a previous-level interface.

In some embodiments, the electronic device 100 may further display a percentage bar on the sound effect selection interface 911.

The following describes subsequent steps by using an example in which the sound effect mode option A is selected. For example, after the sound effect mode option A of the electronic device 100 is selected, the electronic device 100 may receive an input for returning to a home screen, and display the home screen including one or more application icons. The one or more application icons may include a music application icon. The electronic device 100 may receive an input for the music application icon, and display a music playing interface 921. The music playing interface 921 may include but is not limited to a song name, a play control, and the like. The play control may be used to trigger the electronic device 100 to play a song indicated by the song name.

After receiving an input for the play control, the electronic device 100 processes, in response to the input, audio source data (namely, audio data of the song) based on the intelligent enhancement mode, to obtain first audio data and second audio data. For a description of processing the audio source data by the electronic device 100 based on a sound effect mode, refer to the embodiment shown in FIG. 4A and FIG. 4B. Details are not described herein again.

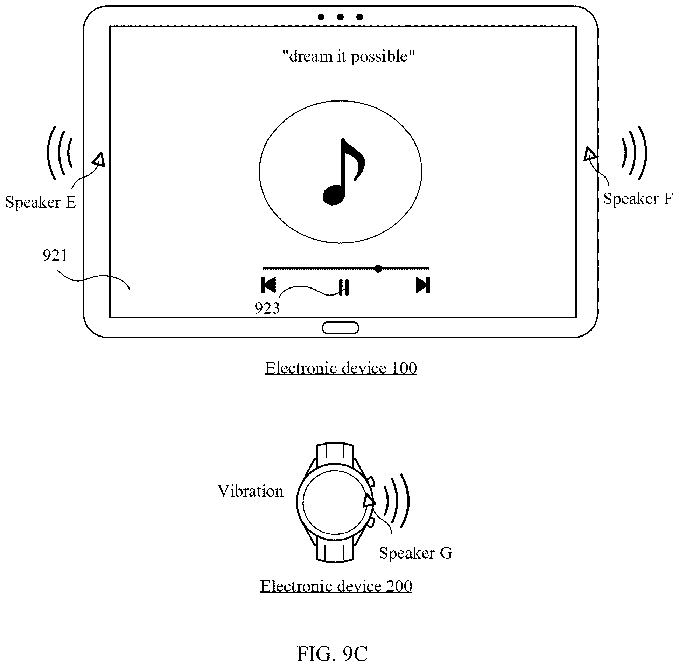

The electronic device 100 may send the second audio data to the electronic device 200 after obtaining the first audio data and the second audio data. The electronic device 100 and the electronic device 200 may simultaneously start to play respective audio data, as shown in FIG. 9C. The electronic device 100 plays the first audio data by using the speaker E and the speaker F, and the electronic device 200 plays the second audio data by using the speaker G and the speaker C. It may be understood that, the electronic device 100 is playing a song, and the electronic device 100 cancels displaying the play control and displays a pause control 923. The pause control 923 may be used to trigger the electronic device 100 and the electronic device 200 to stop playing the audio data.

In some examples, if the intelligent enhancement mode is the rhythm enhancement mode, or the sound effect mode option 912B of the electronic device 100 is selected, when playing the second audio data, the electronic device 200 may obtain a motor pulse signal based on the second audio data, and input the motor pulse signal to a motor of the electronic device 200. The electronic device 200 may control the motor to vibrate at a corresponding vibration frequency as a frequency of an audio signal in the second audio data changes. In this way, the electronic device 200 may increase a tactile feeling for the user, and play the audio source data with both an auditory sense and a tactile sense, to improve user experience.

In some embodiments, if the electronic device 200 does not include a speaker but includes only the motor, the electronic device 100 may also provide the rhythm enhancement mode. The electronic device 100 may extract data of a low-frequency channel of the audio source data, and send the second audio data including the data of the low-frequency channel to the electronic device 200. The electronic device 200 may control vibration of the motor based on the second audio data. In this way, even if the electronic device 200 does not include a speaker, the electronic device 200 can provide a better listening effect for the user through vibration.

In some examples, the electronic device 200 may set vibration sensing intensity of the motor vibration to five levels, and vibration sensing is gradually enhanced from a level 1 to a level 5. The electronic device 200 may obtain, through division, five amplitude ranges of the second audio data based on an amplitude of the second audio data, and amplitude values gradually increase from an amplitude range 1 to an amplitude range 5. Vibration sensing intensity corresponding to audio data that is of the second audio data and that falls within the amplitude range 1 is a level 1, vibration sensing intensity corresponding to audio data that is of the second audio data and that falls within the amplitude range 2 is a level 2, and so on. In this way, vibration intensity of the motor varies with an amplitude of audio data.

In this way, the electronic device 100 may provide a plurality of sound effect modes for the user, to implement different audio playing effects, and improve user experience.

In some embodiments, after establishing communication connections to two or more electronic devices supporting audio data playing, the electronic device 100 may collaboratively play the audio source data with the two or more electronic devices.

In some embodiments, the two or more electronic devices supporting audio data playing may be wearable devices. In this way, it can be convenient for the user to implement multi-device collaborative sound emission by using a portable electronic device in a plurality of scenarios, to enhance a sense of surround.

For descriptions of collaboratively playing the audio source data by the electronic device 100 and two or more electronic devices, refer to the foregoing description of collaboratively playing the audio source data by the electronic device 100 and the electronic device 200. The electronic device 100 may display one or more sound effect modes. The one or more sound effect modes may indicate the electronic device 100 to process the audio source data, to obtain audio data played by the electronic device 100 and the two or more electronic devices. For example, the one or more sound effect modes may include a sound effect mode in which the electronic device 100 plays the first audio data, and the two or more electronic devices jointly play the second audio data (or a part of the two or more electronic devices play the first audio data, and the other part of electronic devices play the second audio data). Alternatively, the one or more sound effect modes may include a sound effect mode in which each electronic device plays different audio data obtained based on the audio source data, that is, audio data played by the electronic device 100 and the two or more electronic devices is different.

For example, if the electronic device 100 is a mobile phone, the plurality of electronic devices supporting audio data playing may include but are not limited to a smartwatch, smart glasses, a headset, and the like. The mobile phone may display a collaborative playing control after establishing a communication connection to both the smartwatch and the smart glasses. The collaborative playing control may be used to trigger the mobile phone, the smartwatch, and the smart glasses to collaboratively play the audio source data. The electronic device 100 may display one or more sound effect mode options, and the electronic device 100 provides a sound effect mode option 1. When the sound effect mode option 1 is selected, the mobile phone may be used to play data of a left channel and data of a right channel that are obtained based on the audio source data, the smartwatch may be used to play the data of the low-frequency channel that is obtained based on the audio source data, and the smart glasses may be used to play data of a left surround channel and data of a right surround channel that are obtained based on the audio source data. In this way, in a plurality of scenarios, multi-device multi-channel collaborative playing is implemented by using a portable device, and an experience effect of a surround sound field is brought to the user. It may be understood that descriptions of audio data played by each electronic device corresponding to the sound effect mode option 1 are merely examples, and should not constitute a specific limitation thereto.

Optionally, the electronic device 100 may further receive a user input, and select the electronic device 100 and one or more of the plurality of electronic devices supporting audio data playing to collaboratively play the audio source data.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An audio playing method, wherein the method is applied to an audio playing system, the audio playing system comprises a first electronic device and a second electronic device, the first electronic device establishes a communication connection to the second electronic device, and the method comprises:
displaying, by the first electronic device, a collaborative playing control, wherein the collaborative playing control is used to indicate the first electronic device and the second electronic device to jointly play audio source data;
receiving, by the first electronic device, a first input for the collaborative playing control;
displaying, by the first electronic device, a plurality of sound effect mode options in response to the first input, wherein the plurality of sound effect mode options comprise a first sound effect mode option;
marking, by the first electronic device, the first sound effect mode option in response to a second input for the first sound effect mode option;
sending, by the first electronic device, second audio data to the second electronic device;
playing, by the second electronic device, the second audio data; and
playing, by the first electronic device, first audio data when the second electronic device plays the second audio data, wherein both the first audio data and the second audio data comprise at least a part of content of the audio source data.

2. The method according to claim 1, wherein the method further comprises:
before the first electronic device receives the first input, receiving, by the first electronic device, a third input for playing the audio source data; or
after receiving the second input, receiving, by the first electronic device, a third input for playing the audio source data.

3. The method according to claim 1 or 2, wherein
when a first sound effect mode is any one of a rhythm enhancement mode, a dialogue enhancement mode, a surround enhancement mode, an all-around enhancement mode, or an intelligent enhancement mode, at least a part of channels comprised in the first audio data are different from at least a part of channels comprised in the second audio data; and/or
when the first sound effect mode is a loudness enhancement mode, at least a part of channels of the first audio data are the same as at least a part of channels of the second audio data.

4. The method according to claim 3, wherein the first sound effect mode option is a rhythm enhancement mode option, the first audio data comprises data of a left channel and data of a right channel, and the second audio data comprises data of a low-frequency channel.

5. The method according to claim 4, wherein the second electronic device comprises a motor; and
when the second electronic device plays the second audio data, the method further comprises:
converting, by the second electronic device, the second audio data into a pulse signal;
transmitting, by the second electronic device, the pulse signal to the motor of the second electronic device; and
performing, by the motor of the second electronic device, vibration.

6. The method according to claim 3, wherein the first sound effect mode option is a dialogue enhancement mode option, the first audio data comprises data of a left channel and data of a right channel, and the second audio data comprises data of a center channel.

7. The method according to claim 3, wherein the first sound effect mode option is a loudness enhancement mode option, the first audio data comprises data of a left channel and data of a right channel, and the second audio data comprises the data of the left channel and the data of the right channel.

8. The method according to claim 7, wherein when the second electronic device comprises one speaker, the second electronic device plays the data of the left channel and the data of the right channel of the second audio data by using the one speaker;
when the second electronic device comprises two speakers, and the two speakers comprise a first speaker and a second speaker, the second electronic device plays the data of the left channel by using the first speaker, and plays the data of the right channel by using the second speaker; or
when the second electronic device comprises three or more speakers, and the three or more speakers comprise a first speaker, a second speaker, and a third speaker, the data of the left channel is played by using the first speaker, the data of the right channel is played by using the second speaker, and the data of the left channel and the data of the right channel of the second audio data are played by using the third speaker.

9. The method according to claim 3, wherein the first sound effect mode option is a surround enhancement mode option, the first audio data comprises data of a left channel and data of a right channel, and the second audio data comprises data of a left surround channel and data of a right surround channel.

10. The method according to claim 3, wherein the first sound effect mode option is an all-around enhancement mode option, the first audio data comprises data of a left channel and data of a right channel, and the second audio data comprises data of a left surround channel, data of a right surround channel, and data of a center channel.

11. The method according to claim 10, wherein when the second electronic device comprises two speakers, and the two speakers comprise a first speaker and a second speaker, the second electronic device plays the data of the left surround channel and the data of the center channel by using the first speaker, and plays the data of the right surround channel and the data of the center channel by using the second speaker; or
when the second electronic device comprises three or more speakers, and the three or more speakers comprise a first speaker, a second speaker, and a third speaker, the data of the left surround channel is played by using the first speaker, the data of the right surround channel is played by using the second speaker, and the data of the center channel is played by using the third speaker.

12. The method according to any one of claims 1 to 3, wherein the displaying, by the first electronic device, a plurality of sound effect mode options in response to the first input specifically comprises:
obtaining, by the first electronic device in response to the first input, the plurality of sound effect mode options based on a device type of the second electronic device and a stored correspondence between the device type and a sound effect mode option, wherein
the device type of the second electronic device corresponds to a plurality of sound effect modes.

13. The method according to claim 12, wherein the device type of the second electronic device is a smartwatch, the plurality of sound effect mode options comprise one or more of an intelligent enhancement mode option, a loudness enhancement mode option, a rhythm enhancement mode option, and a dialogue enhancement mode option, and the intelligent enhancement mode corresponding to the intelligent enhancement mode option is a combination of the rhythm enhancement mode and the loudness enhancement mode.

14. The method according to claim 12, wherein audio data that corresponds to the intelligent enhancement mode and that is played by the first electronic device comprises data of a left channel and data of a right channel, and audio data played by the second electronic device comprises the data of the left channel, the data of the right channel, and data of a low-frequency channel.

15. The method according to claim 12, wherein the device type of the second electronic device is smart glasses, a neckband sound box, or a Bluetooth headset, the plurality of sound effect mode options comprise one or more of an intelligent enhancement mode option, a loudness enhancement mode option, a rhythm enhancement mode option, a dialogue enhancement mode option, a surround enhancement mode option, and an all-around enhancement mode option, and the intelligent enhancement mode corresponding to the intelligent enhancement mode option is a combination of the rhythm enhancement mode and the loudness enhancement mode, or a combination of the surround enhancement mode and the dialogue enhancement mode.

16. The method according to claim 15, wherein when the audio source data belongs to a video file, the intelligent enhancement mode is the combination of the surround enhancement mode and the dialogue enhancement mode, audio data that corresponds to the intelligent enhancement mode and that is played by the first electronic device comprises data of a left channel and data of a right channel, and audio data played by the second electronic device comprises data of a left surround channel, data of a right surround channel, and data of a center channel; or
when the audio source data belongs to an audio file, the intelligent enhancement mode is the combination of the rhythm enhancement mode and the loudness enhancement mode, audio data that corresponds to the intelligent enhancement mode and that is played by the first electronic device comprises data of a left channel and data of a right channel, and audio data played by the second electronic device comprises the data of the left channel, the data of the right channel, and data of a low-frequency channel.

17. The method according to any one of claims 3 to 16, wherein before the first electronic device receives the second input, the plurality of sound effect mode options comprise the intelligent enhancement mode option that is marked; and the marking, by the first electronic device, the first sound effect mode option in response to a second input for the first sound effect mode option specifically comprises:
in response to the second input for the first sound effect mode option, unmarking, by the first electronic device, the intelligent enhancement mode option, and marking the first sound effect mode option.

18. The method according to any one of claims 3 to 17, wherein when the second electronic device comprises the first speaker and the second speaker, and the first sound effect mode option is the loudness enhancement mode option, the surround enhancement mode option, or the all-around enhancement mode option, the method further comprises:
when a posture of the second electronic device and/or a posture of the first electronic device change/changes, the first audio data remains unchanged, and the second audio data sent by the first electronic device to the second electronic device changes with the posture.

19. The method according to any one of claims 1 to 17, wherein when the first electronic device comprises a fourth speaker and a fifth speaker, the method further comprises:
when a posture of the second electronic device and/or a posture of the first electronic device change/changes, the second audio data remains unchanged, and the first audio data played by the first electronic device changes with the posture.

20. The method according to any one of claims 1 to 19, wherein the method further comprises:
when a position of the second electronic device and/or a position of the first electronic device change/changes, a beam direction of a sound wave signal emitted by a speaker of the first electronic device changes with the position.

21. The method according to any one of claims 1 to 20, wherein the method further comprises:
when a distance between the first electronic device and the second electronic device is a first distance, playing, by the first electronic device, the first audio data at first volume; or when a distance between the first electronic device and the second electronic device is a second distance, playing, by the first electronic device, the first audio data at second volume, wherein the first distance is shorter than the second distance, and the first volume is lower than the second volume.

22. The method according to any one of claims 1 to 21, wherein when the first electronic device displays the plurality of sound effect modes in response to the first input, the method further comprises:
displaying, by the first electronic device, a percentage bar; and
if the first sound effect mode option is the loudness enhancement mode option, the rhythm enhancement mode option, or the dialogue enhancement mode option, when a value in the percentage bar is a first value, playing, by the second electronic device, the second audio data at third volume, or when a value in the percentage bar is a second value, playing, by the second electronic device, the second audio data at fourth volume, wherein the first value is less than the second value, and the third volume is lower than the fourth volume; or
if the first sound effect mode option is the all-around enhancement mode option or the surround mode option, when a value in the percentage bar is a third value, playing, by the second electronic device, the second audio data when a distance between a simulated audio source and a user is a third distance, or when a value in the percentage bar is a fourth value, playing, by the second electronic device, the second audio data when a distance between a simulated audio source and a user is a fourth distance, wherein the third value is less than the fourth value, and the third distance is shorter than the fourth distance.

23. An audio playing system, comprising a first electronic device and a second electronic device, wherein
the first electronic device is configured to implement the method steps performed by the first electronic device according to claims 1 to 22; and
the second electronic device is configured to implement the method steps performed by the second electronic device according to claims 1 to 22.

24. An audio playing method, applied to a first electronic device, wherein the method comprises:
displaying, by the first electronic device, a collaborative playing control, wherein the collaborative playing control is used to indicate the first electronic device and a second electronic device to jointly play audio source data;
receiving, by the first electronic device, a first input for the collaborative playing control;
displaying, by the first electronic device, a plurality of sound effect mode options in response to the first input, wherein the plurality of sound effect mode options comprise a first sound effect mode option;
marking, by the first electronic device, the first sound effect mode option in response to a second input for the first sound effect mode option;
sending, by the first electronic device, second audio data to the second electronic device; and
playing, by the first electronic device, first audio data when the second electronic device plays the second audio data, wherein both the first audio data and the second audio data comprise at least a part of content of the audio source data.

25. An electronic device, wherein the electronic device is a first electronic device, and comprises one or more processors, a plurality of speakers, and one or more memories, the one or more memories and the plurality of speakers are coupled to the one or more processors, the one or more memories are configured to store computer program code, the computer program code comprises computer instructions, and when the one or more processors execute the computer instructions, the first electronic device is enabled to perform the method according to claim 24.
